(19) **Europäisches Patentamt**
**European Patent Office**
**Office européen des brevets**

(11) **EP 1 754 042 B1**

(12) **EUROPÄISCHE PATENTSCHRIFT**

(45) Veröffentlichungstag und Bekanntmachung des Hinweises auf die Patenterteilung:
**23.01.2008 Patentblatt 2008/04**

(21) Anmeldenummer: **05750492.0**

(22) Anmeldetag: **21.05.2005**

(51) Int Cl.:
***G01N 21/00*** *(2006.01)*  ***C09D 4/00*** *(2006.01)*
***C08J 3/00*** *(2006.01)*

(86) Internationale Anmeldenummer:
**PCT/EP2005/005517**

(87) Internationale Veröffentlichungsnummer:
**WO 2005/119208 (15.12.2005 Gazette 2005/50)**

(54) **VERFAHREN ZUR STRAHLUNGSHÄRTUNG VON BESCHICHTUNGEN**

RADIATION-CURING METHOD FOR COATINGS

PROCEDE POUR DURCIR DES REVETEMENTS SOUS L'EFFET D'UN RAYONNEMENT

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **26.05.2004 DE 102004026325**
**20.07.2004 DE 102004035066**

(43) Veröffentlichungstag der Anmeldung:
**21.02.2007 Patentblatt 2007/08**

(73) Patentinhaber: **BASF Aktiengesellschaft**
**67056 Ludwigshafen (DE)**

(72) Erfinder:
• **FREY, Thomas**
**68199 Mannheim (DE)**
• **GRAF, Karl**
**67067 Ludwigshafen (DE)**
• **BIEHLER, Manfred**
**76831 Ilbesheim (DE)**

(56) Entgegenhaltungen:
**US-A- 5 302 627**     **US-A- 5 633 313**

EP 1 754 042 B1

**Beschreibung**

Die vorliegende Erfindung betrifft ein Verfahren zur Ermittlung der mindestens erforderlichen Bedingungen zur Strahlungshärtung von pigmentierten, strahlungshärtbaren Beschichtungsmassen sowie Vorrichtung und Geschäftsmethode dazu.

Strahlungshärtung zur Herstellung von transparenten Beschichtungen wie beispielsweise Klar- oder Decklakken ist eine industriell etablierte Technologie mit großen Vorteilen wie hohe Prozessgeschwindigkeit, Lösungsmittelfreiheit und hohe Vernetzungsdichte.

Im Gegensatz zu transparenten Beschichtungsmassen sind pigmentierte Beschichtungsmassen per se schwierig durch Strahlung zu härten, da die enthaltenen Pigmente die Strahlung absorbieren und reflektieren und somit nur ein geringer Teil der eingestrahlten Energiedosis tatsächlich effektiv eine Härtung bewirken kann. Der Einsatz der Strahlungshärtung für farbige und deckende Beschichtungen wird also behindert durch die Wechselwirkung der dabei eingesetzten Pigmente mit der Strahlung, deren Intensität dabei geschwächt wird. Die Durchhärtung der Beschichtung insbesondere an ihrer Unterseite, d.h. zum Substrat hin, kann durch die Pigmentierung bis zur Unbrauchbarkeit der Beschichtung reduziert werden.

Es hat nicht an Versuchen gefehlt, auch pigmentierte Beschichtungsmassen strahlungszuhärten. Dabei wurden die Beschichtungsmassen der Strahlung so lange ausgesetzt, bis auf empirischer Basis eine Durchhärtung zu erwarten war.

Nachteilig daran ist, daß die empirische Basis nur durch Versuchsreihen ermittelt werden kann und keine Vorhersagekraft besitzt.

Insbesondere wenn eine neue Pigmentierung oder Pigmentierungshöhe (Pigmentierungskonzentration) eingeführt werden soll, für die keine empirischen Werte vorliegen, konnten neue Formulierungen bisher nur in aufwendigen neuen Testreihen aufgrund von Versuch und Irrtum experimentell bestimmt werden.

Aufgrund einer fehlenden Vorhersagekraft einer solchen empirischen Basis werden die Beschichtungsmassen in der Regel entweder der Strahlung länger ausgesetzt als nötig, was zu einer unnötigen Blockierung der kapitalintensiven Beleuchtungseinrichtungen und somit einer ungünstigen Anlagenauslastung führt, oder nicht lang genug, was zu einer nicht durchgehärteten Beschichtung führt, sich also negativ auf z.B. Haftung oder Härte der Beschichtung auswirkt und somit zu Fehlchargen führen kann.

Hauser, Osterloh und Jacobi beschrieben auf dem XIV FATIPEC-Kongreß, 4. - 9. Juni 1978, Budapest, S. 241 - 247, dort besonders Kap. 6, den Einfluß von Energieverteilung einer UV-Lampe, Absorptionsspektren eines Photoinitiators und Absorptionsspektren von reinen Pigmenten auf die zu erwartende UV-Härtung.

Nachteilig daran ist, daß mit dieser Methode lediglich existierende Pigmentierungen bewertet werden können und keine Vorhersagen zu bisher nicht gemessene Pigmentzusammensetzungen möglich sind. Weiterhin gehen Hauser et al. vom Absorptionsspektrum eines Photoinitiators aus und erkennen nicht, daß dieses Absorptionsspektrum nicht notwendigerweise mit dessen spektraler Aktivierbarkeit übereinstimmt (siehe unten).

Die technische Aufgabe der vorliegenden Erfindung war es, ein Verfahren bereitzustellen, mit dem einerseits die Eignung bzw. Nicht-Eignung der Strahlungshärtung für eine vorgegebene Pigmentierung einer Beschichtung vorhergesagt werden kann und die Variablen für die Strahlungshärtung so ermittelt werden können, daß eine ausreichende Durchhärtung erwartet werden kann.

Die Aufgabe wird gelöst durch ein Verfahren zur Ermittlung der Bedingungen zur Strahlungshärtung von strahlungshärtbaren, pigmentierten Beschichtungsmassen, enthaltend mindestens ein Pigment P, mindestens ein Bindemittel B und mindestens einen Photoinitiator I, auf einem Substrat, umfassend die Schritte

a) Vorgeben einer Pigmentzusammensetzung oder gegebenenfalls Ermittlung der zum Erzielen des gewünschten Farbeindrucks erforderlichen Pigmentzusammensetzung,

b) Messung der Reflexionsspektren der in der Pigmentzusammensetzung enthaltenen Pigmente P in Abhängigkeit von deren Konzentration, Zusammensetzung und/oder Schichtdicke,

c) Ermittlung der konzentrationsspezifischen Absorptions- $K(\lambda)$ und der Streuspektren $S(\lambda)$ der einzelnen Pigmente aus dem in b) gemessenen Reflexionsspektrum im gewünschten Wellenlängenbereich $\lambda$,

d) Messung der Reflexion des Substrats im gewünschten Spektralbereich,

e) Ermittlung der Werte für Gesamtabsorption $K_t(\lambda)$ und Gesamtstreuung $S_t(\lambda)$ der Beschichtungsmasse auf dem Substrat aus den Werten aus c) und d) für die gewünschte Pigmentzusammensetzung,

f) Ermittlung der integralen Transmission $T_i$ für die Pigmentzusammensetzung im gewünschten Wellenlängenbereich und

g) Ermittlung der Variablen, die für die Strahlungshärtung erforderlich sind, auf Basis der in f) ermittelten integralen Transmission $T_i$.

Vorteil der vorliegenden Erfindung ist, daß der Umfang experimenteller Testreihen wesentlich reduziert wird, die Auslastung der Belichtungsanlagen optimiert werden kann und Fehlchargen durch unzureichende Bestrahlung vermieden werden können.

Im Rahmen dieser Schrift werden die Begriffe wie folgt verwendet:

Pigmente wird im Sinne dieser Schrift zusammenfassend gebraucht für Pigmente im eigentlichen Sinne, Farbstoffe und/oder Füllstoffe, bevorzugt für Pigmente im eigentlichen Sinne und Füllstoffe und besonders bevorzugt für Pigmente im eigentlichen Sinne.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g /1000 g Anwendungsmedium, bevorzugt unter 0,5, besonders bevorzugt unter 0,25, ganz besonders bevorzugt unter 0,1 und insbesondere unter 0,05 g /1000 g Anwendungsmedium.

Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepaßt werden, beispielsweise wie in Schritt a) beschrieben. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z,B. titandioxidbeschichteter Glimmer, eisenoxidbeschichteter Glimmer, mischoxidbeschichteter Glimmer (z.B. mit Titandioxid und $Fe_2O_3$ oder Titandioxid und $Cr_2O_3$), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g /1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe\Nerbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Unter dem Beschichtungsmedium wird das das Pigment umgebende Medium verstanden, beispielsweise Klarlacke, Bindemittel, Pulver, beispielsweise für Pulverlacke, Kunststofffilme oder Folien.

Unter der Beschichtungsmasse wird die Zusammensetzung verstanden, die Beschichtungsmedium (Bindemittel) und Pigment enthält.

Unter der Beschichtung wird die applizierte und getrocknete und/oder gehärtete Beschichtungsmasse verstanden.

Das mindestens eine Bindemittel B kann ausgewählt sein unter beliebigen, strahlungshärtbaren Verbindungen. Dabei kann es sich um radikalisch oder kationisch polymerisierbare Verbindungen handeln, die mindestens eine C-C-Mehrfachbindung enthalten. Bevorzugt enthält das mindestens eine Bindemittel B mindestens eine radikalisch polymerisierbare Bindung, besonders bevorzugt 1 bis 20 ethylenisch ungesättigte Doppelbindungen, ganz besonders bevorzugt 1 -10, insbesondere 1 - 6 und speziell 2 - 4 radikalisch polymerisierbare Bindungen.

Bevorzugt handelt es sich bei den radikalisch polymerisierbaren ethylenisch ungesättigten Doppelbindungen um Acrylat- oder Methacrylatgruppen, bevorzugt Acrylatgruppen, und bei den kationisch polymerisierbaren ethylenisch ungesättigten Doppelbindungen um Vinylethergruppen.

Der Gehalt an ungesättigten radikalisch oder kationisch polymerisierbaren Gruppen kann beispielsweise mindestens 0,01 mol/100 g Verbindung, bevorzugt mindestens 0,05, besonders bevorzugt mindestens 0,1 und insbesondere mindestens 0,2 mol/100 g betragen.

Das zahlenmittlere Molekulargewicht $M_n$ dieser Verbindungen, bestimmt durch Gelpermeationschromatographie mit Tetrahydrofuran als Elutionsmittel und Polystyrol als Standard, kann beispielsweise zwischen 200 und 200.000, bevorzugt zwischen 250 und 100.000, besonders bevorzugt zwischen 350 und 50.000 und insbesondere zwischen 500 und 30.000 betragen.

Bei den Bindemitteln kann es sich beispielsweise um handelsübliche strahlungshärtbare Produkte handeln, beispielsweise Methacrylsäure- oder bevorzugt Acrylsäureester von Polyetherolen, Polyesterolen, Urethanen, Aminoplasten, Polyacrylaten oder Epoxyharzen, gegebenenfalls alkoxylierten Monoalkoholen, gegebenenfalls alkoxylierten Polyalkoholen, Reaktiverdünner oder Gemische daraus, sowie multifunktionelle, polymerisationsfähige Verbindungen.

Multifunktionelle, polymerisationsfähige Verbindungen, also beispielsweise multifunktionelle (Meth)acrylate, tragen mindestens 2, bevorzugt 3 -10, besonders bevorzugt 3 - 6, ganz besonders bevorzugt 3 - 4 und insbesondere 3 (Meth)acrylatgruppen, bevorzugt Acrylatgruppen.

Dies können beispielsweise Ester der (Meth)acrylsäure mit entsprechend mindestens zweiwertigen, gegebenenfalls alkoxylierten, Polyalkoholen sein.

Derartige Polyalkohole sind beispielsweise mindestens zweiwertige Polyole, Polyether- oder Polyesterole oder Polyacrylatpolyole mit einer mittleren OH-Funktionalität von mindestens 2, bevorzugt 3 bis 10, geeignet.

Geeignete Alkylenoxide zur Alkoxylierung sind beispielsweise Ethylenoxid, Propylenoxid, *iso*-Butylenoxid, Vinyloxiran und/oder Styroloxid.

Die Alkylenoxidkette kann bevorzugt aus Ethylenoxid-, Propylenoxid- und/oder Butylenoxideinheiten zusammengesetzt sein. Eine solche Kette kann sich aus einer Spezies eines Alkylenoxides oder aus einem Gemisch von Alkylenoxiden zusammensetzen. Wird ein Gemisch verwendet, können die unterschiedlichen Alkylenoxideinheiten statistisch oder als Block oder Blöcke einzelner Spezies vorliegen. Bevorzugt ist als Alkylenoxid Ethylenoxid, Propylenoxid oder ein Gemisch daraus, besonders bevorzugt ist es Ethylenoxid oder Propylenoxid und ganz besonders bevorzugt Ethylenoxid.

Die Anzahl der Alkylenoxideinheiten in der Kette beträgt beispielsweise 1 bis 20, bevorzugt 1 bis 10, besonders bevorzugt 1 - 5 und insbesondere 1 - 3 und außergewöhnlich bevorzugt 1, bezogen auf die jeweiligen Hydroxygruppen des Polyalkohols.

Die Molekulargewichte $M_n$ der Polyesterole bzw. Polyetherole liegen bevorzugt zwischen 100 und 4000 ($M_n$ bestimmt durch Gelpermeationschromatographie mit Polystyrol als Standard und Tetrahydrofuran als Elutionsmittel).

Weitere multifunktionelle (Meth)acrylate können Polyester(meth)acrylate, Epoxy-(meth)acrylate, Urethan(meth)acrylate oder (meth)acrylierte Polyacrylate sein. Anstelle der (Meth)acrylatgruppen können auch andere radikalisch oder kationisch polymerisierbare Gruppen eingesetzt werden.

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen.

Besonders bevorzugte multifunktionelle (Meth)acrylate sind Trimethylolpropantri(meth)-acrylat, (Meth)Acrylate von ethoxyliertem und/oder propoxyliertem Trimethylolpropan, Pentaerythrit, Glycerin oder Di-Trimethylolpropan. Besonders bevorzugt sind Acrylate von ethoxyliertem und/oder propoxyliertem Trimethylolpropan oder Pentaerythrit.

Reaktiverdünner sind beispielsweise Ester der (Meth)acrylsäure mit Alkoholen, die 1 bis 20 C-Atome aufweisen, z.B. (Meth)acrylsäuremethylester, (Meth)acrylsäureethylester, (Meth)acrylsäurebutylester, (Meth)acrylsäure-2-ethylhexylester, 2-Hydroxyethylacrylat, 4-Hydroxybutyiacrylat , Dihydrodicyclopentadienylacrylat, Vinylaromatische Verbindungen, z.B. Styrol, Divinylbenzol, $\alpha,\beta$-ungesättigte Nitrile, z.B. Acrylnitril, Methacrylnitril, $\alpha,\beta$-ungesättigte Aldehyde, z.B. Acrolein, Methacrolein, Vinylester, z.B. Vinylacetat, Vinylpropionat, halogenierte ethylenisch ungesättigte Verbindungen, z.B. Vinylchlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, monoethy-

EP 1 754 042 B1

Ienisch ungesättigten Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, Maleinsäure, N-Vinyl-pyrrolidon, N-Vinyllactame, wie z.B. N-Vinylcaprolactam, N-Vinyl-N-Alkyl-carbonsäureamide oder N-Vinyl-carbonsäureamide, wie z. B. N-Vinylacetamid, N-Vinyl-N-methylformamid und N-Vinyl-N-methylacetamid oder Vinylether, z.B. Methylvinylether, Ethylvinylether, *n*-Propylvinylether, *iso*-Propylvinylether, *n*-Butylvinylether, *sek*-Butylvinylether, *iso*-Butylvinylether, *tert*-Butylvinylether, 4-Hydroxybutylvinylether, sowie Gemische davon.

Als Photoinitiatoren I können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

Darunter werden solche Photoinitiatoren verstanden, die unter Lichteinwirkung Radikale freisetzen und eine radikalische Reaktion, beispielsweise eine radikalische Polymerisation, starten können.

In Betracht kommen beispielsweise Phosphinoxide, Benzophenone, $\alpha$-Hydroxy-alkylaryl-ketone, Thioxantho-ne, Anthrachinone, Acetophenone, Benzoine und Benzoinether, Ketale, Imidazole oder Phenylglyoxylsäuren und Gemische davon.

Phosphinoxide sind beispielsweise Mono- oder Bisacylphosphinoxide, wie z.B. Irgacure® 819 (Bis(2,4,6-Trimethylbenzoyl)phenylphosphinoxid), wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO), Ethyl-2,4,6-trimethylbenzoylphenylphosphinat oder Bis(2,6-dimethoxybenzoyl) -2,4,4-trimethylpentylphosphinoxid,

Benzophenone sind beispielsweise Benzophenon, 4-Aminobenzophenon, 4,4'-Bis-(dimethylamino)benzophenon, 4-Phenylbenzophenon, 4-Chlorbenzophenon, Michlers Keton, o-Methoxybenzophenon, 2,4,6-Trimethylbenzophenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon,

$\alpha$-Hydroxy-alkyl-aryl-ketone sind beispielsweise 1-Benzoylcyclohexan-1-ol (1-Hydroxy-cyclohexyl-phenylketon), 2-Hydroxy-2,2-dimethylacetophenon (2-Hydroxy-2-methyl-1-phenyl-propan-1-on), 1-Hydroxyacetophenon, 1-[4-(2-Hydroxyethoxy)-phenyl]-2-hydroxy-2-methyl-1-propan-1-on oder Polymeres, das 2-Hydroxy-2-methyl-1-(4-iso-propen-2-yl-phenyl)-propan-1-on einpolymerisiert enthält (Esacure® KIP 150)

Xanthone und Thioxanthone sind beispielsweise 10-Thioxanthenon, Thioxanthen-9-on, Xanthen-9-on, 2,4-Dimethylthioxanthon, 2,4-Diethylthioxanthon, 2,4-Di-iso-propylthioxanthon, 2,4-Dichlorthioxanthon oder Chloroxanthe-non,

Anthrachinone sind beispielsweise $\beta$-Methylanthrachinon, *tert*-Butylanthrachinon, Anthrachinoncarbonylsäu-reester, Benz[de]anthracen-7-on, Benz[a]anthracen-7,12-dion, 2-Methylanthrachinon, 2-Ethylanthrachinon, 2-*tert*-Butylanthrachinon, 1-Chloranthrachinon oder 2-Amylanthrachinon,

Acetophenone sind beispielsweise Acetophenon, Acetonaphthochinon, Valerophenon, Hexanophenon, $\alpha$-Phe-nylbutyrophenon, p-Morpholinopropiophenon, Dibenzosuberon, 4-Morpholinobenzophenon, p-Diacetylbenzol, 4'-Me-thoxyacetophenon, $\alpha$-Tetralon, 9-Acetylphenanthren, 2-Acetylphenanthren, 3-Acetylphenanthren, 3-Acetylindol, 9-Fluorenon, 1-Indanon, 1,3,4-Triacetylbenzol, 1-Acetonaphthon, 2-Acetonaphthon, 2,2-Dimethoxy-2-phenylacetophenon, 2,2-Diethoxy-2-phenylacetophenon, 1,1-Dichloracetophenon, 1-Hydroxyacetophenon, 2,2-Diethoxyacetophenon, 2-Methyl-1-[4-(methylthio)-phenyl]-2-morpholinopropan-1-on, 2,2-Dimethoxy-1,2-diphenylethan-2-on oder 2-Benzyl-2-dimethylamino-1-(4-morpholinophenyl)-butan-1-on,

Benzoine und Benzoinether sind beispielsweise 4-Morpholinodeoxybenzoin, Benzoin, Benzoin-iso-butylether, Benzoin-tetrahydropyranylether, Benzoin-methylether, Benzoin-ethylether, Benzoin-butylether, Benzoin-iso-propylether oder 7-H-Benzoin-methylether oder

Ketale sind beispielsweise Acetophenondimethylketal, 2,2-Diethoxyacetophenon, oder Benzilketale, wie Benzildimethylketal.

Phenylglyoxylsäuren sind beispielsweise in DE-A 198 26 712, DE-A 199 13 353 oder WO 98/33761 beschrieben.

Weiterhin verwendbare Photoinitiatoren sind beispielsweise Benzaldehyd, Methylethylketon, 1-Naphthaldehyd, Triphenylphosphin, Tri-o-Tolylphosphin oder 2,3-Butandion. Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Als weitere lacktypische Additive in den Beschichtungsmassen können beispielsweise Antioxidantien, Oxidationsinhibitoren, Stabilisatoren, Aktivatoren (Beschleuniger), Farbstoffe, Entgasungsmittel, Glanzmittel, antistatische Agentien, Flammschutzmittel, Verdicker, thixotrope Agentien, Verlaufshilfsmittel, Bindemittel, Antischaummittel, Duftstoffe, oberflächenaktive Agentien, Viskositätsmodifikatoren, Weichmacher, Plastifizierer, klebrigmachende Harze (Takkifier), Chelatbildner oder Verträglichkeitsmittel (compatibilizer) zugesetzt werden.

Die Beschichtungsmassen können neben der Strahlungshärtung auch noch durch weitere Härtungsmechanismen härtbar sein ("Dual Cure" beziehungsweise "Multi Cure"). damit ist im Rahmen dieser Schrift ein Härtungsprozeß bezeichnet, der über zwei beziehungsweise mehr als zwei Mechanismen erfolgt und zwar beispielsweise ausgewählt aus strahlungs-, feuchtigkeits-, chemisch, oxidativ und/oder thermisch härtend, bevorzugt ausgewählt aus strahlungs-, feuchtigkeits-, chemisch und/oder thermisch härtend, besonders bevorzugt ausgewählt aus strahlungs-, chemisch und/oder thermisch härtend und ganz besonders bevorzugt strahlungs- und chemisch härtend.

Insbesondere ist das erfindungsgemäße Verfahren jedoch zur Härtung von ausschließlich strahlungshärtbaren Beschichtungsmassen einsetzbar.

Die Substrate, die mit dem erfindungsgemäßen Verfahren beschichtet werden können, sind nicht beschränkt. Es kann sich beispielsweise um Holz, Papier, Textil, Leder, Vlies, Kunststoffoberflächen, Glas, Keramik, mineralische Baustoffe, wie Zement-Formsteine und Faserzementplatten, oder Metalle oder beschichtete Metalle, bevorzugt um Kunststoffe oder Metalle, die beispielsweise auch als Folien vorliegen können, handeln.

Unter den Kunststoffen namentlich genannt seien Polyethylen, Polypropylen, Polystyrol, Polybutadien, Polyester, Polyamide, Polyether, Polyvinylchlorid, Polycarbonat, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon. Insbesondere genannt seien ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PIB, PMMA, POM, PP, PPS, PS, PSU, PUR, PVAC, PVAL, PVC, PVDC, PVP, SAN, SB, SMS, UF, UP-Kunststoffe (Kurzzeichen gemäß DIN 7728) und aliphatische Polyketone.

Im Folgenden werden die einzelnen Schritte des erfindungsgemäßen Verfahrens näher erläutert:

Schritt a): Vorgeben einer Pigmentzusammensetzung oder gegebenenfalls Ermittlung der zum Erzielen des gewünschten Farbeindrucks erforderlichen Pigmentzusammensetzung.

Die zur Anwendung vorgesehene bzw. auf Eignung zur Aushärtung zu überprüfende Beschichtungsmasse enthält mindestens ein Pigment P, und kann sich aus einem oder mehreren Pigmenten $P_1$, $P_2$, ... mit gegebenen Mengenanteilen $m_1$, $m_2$, ... zusammensetzen.

Die jeweiligen Mengenanteile der Pigmentzusammensetzung können z.B. aus einer Farbrezeptrechnung stammen und so eingestellt sein, dass mit der Beschichtung ein vorgegebener Farbton erzeugt wird. Die Farbrezeptrechnung kann basierend auf den nach b) und d) bestimmten $K(\lambda)$- und $S(\lambda)$-Spektren oder durch ein separates Farbrezeptiersystem erfolgt sein.

Die optischen Eigenschaften einer Beschichtung, die verschiedene Pigmente enthält, setzen sich entsprechend einem Formalismus, den die verwendete Theorie liefern muss, aus den optischen Eigenschaften der Einzelpigmente und ihrem jeweiligen Anteil an der Gesamtpigmentierung zusammen.

Methoden zur Farbrezeptierung sind verfügbar und dem Fachmann an sich bekannt, ein Beispiel ist die Farbrezeptierung gemäß der EP-B1 931 247 (= US 6,064,487).

Schritt b): Messung der Reflexionsspektren der in der Pigmentzusammensetzung enthaltenen Pigmente P für die einzelnen Pigmente in Abhängigkeit von deren Konzentration, Zusammensetzung und/oder Schichtdicke.

Die Durchhärtbarkeit einer Beschichtungsmasse wird beeinflußt durch Pigmente, die mit der härtenden Strahlung wechselwirken, d.h. diese absorbieren, reflektieren und/oder streuen. Deshalb werden wellenlängenabhängige Kennzahlen für die Absorptions- (K) und Streueigenschaften (S) aller enthaltenen Pigmente $P_1$, $P_2$, .., bestimmt, die Bestandteil der Pigmentierungszusammensetzung einer zur Durchhärtung vorgesehenen Beschichtungsmasse sind, mit dem Ziel, die Durchhärtbarkeit der Beschichtungsmasse ohne weitere experimentelle Tests zu berechnen.

Dazu wird jedes einzelne dieser Pigmente $P_1$, $P_2$, ... zur Aufnahme von Eichmessungen in verschiedenen Konzentrationen, beispielsweise in Anteilen von 0,1 - 30 Gew%, bevorzugt 0,1 bis 25 Gew% und besonders bevorzugt 0,3 -15 Gew% bzgl. der Beschichtungsmasse, in ein Beschichtungsmedium eingearbeitet. Diese Beschichtungsmasse wird mit mindestens einem Bindemittel versehen, das bevorzugt mit dem o.g. mindestens einen Bindemittel B übereinstimmt, jedoch nicht notwendigerweise übereinstimmen muß, da der Einfluß des Bindemittels auf Absorption und Streuung in der Regel vernachlässigt werden kann, was erfindungsgemäß bevorzugt der Fall ist.

Das Bindemittel in Schritt b) braucht nicht notwendigerweise strahlungshärtbar sein, ist es aber bevorzugt.

Auch Ansätze aus definierten Mischungen verschiedener Pigmente sind möglich. Das Beschichtungsmedium sollte bzgl. seiner optischen Eigenschaften (nach der Filmbildung) und seiner Dispergierwirkung vorzugsweise möglichst ähnlich oder identisch mit dem Beschichtungsmedium sein, das für das Verfahren angewandt werden soll.

Beschichtungsmedium kann z.B. ein Flüssig- oder Pulver-Klarlack sein, die Härtung zur Erzeugung der Beschichtung kann durch Strahlungshärtung und/oder auf sonstige Weise (beispielsweise thermisch oder bei Raumtemperatur, Zwei-Komponenten-Reaktion) erfolgen. Der Grad der Aushärtung ist für diese Eichmessungen nicht relevant, solange er nicht die optischen Eigenschaften oder die Zusammensetzung der Beschichtung beeinflusst und die Beschichtung ausreichend mechanisch belastbar für die Messung ist.

Die verschieden pigmentierten Beschichtungsmassen werden durch ein geeignetes Verfahren appliziert, z.B. Rakeln, Spritzen, elektrisch Abscheiden, Gießen, Streichen, Spin-coating, Sprühen, möglich sind auch pigmentierte Folien oder Schlitzextrudate.

Die Applikation erfolgt auf einem geeigneten Untergrund, z.B. Blechtafeln. Der Untergrund muss mindestens zwei flächige Bereiche aufweisen, die sich darin unterscheiden, dass sie im gesamten später betrachteten Wellenlängenbereich, beispielsweise von 200 bis 2500 nm, unterschiedliche Reflexionswerte, z.B. <40% und >60%, aufweisen. Beide Bereiche müssen bei der Applikation überlackiert werden.

Der Untergrund kann mit einer Grundierung, beispielsweise einer Haftprimer-Schicht versehen sein.

Die angestrebte Schichtdicke sollte ähnlich derjenigen im späteren Verfahren sein und beträgt in der Regel 1 bis 200 $\mu$m, bevorzugt 2 - 200, besonders bevorzugt 2 - 150 und ganz besonders bevorzugt 5 bis 150 $\mu$m. Es werden die tatsächlichen Schichtdicken der trockenen Beschichtungen über dem Untergrund gemessen.

Reflexionsspektren der Beschichtung werden für den gesamten später betrachteten Wellenlängenbereich über beiden Untergründen gemessen. Die Messung erfolgt mit einem geeigneten Spektrometer, beispielsweise einem UV/VIS-Spektrometer. Sofern nur der Einfluss der Pigmente auf die härtende Strahlung in einem Wellenlängenbereich oberhalb 360-400nm berechnet werden soll, kann die Reflexionsmessung mit einem Farbmessgerät erfolgen, die genaue untere und obere Grenze des Messbereichs ist abhängig vom Messgerät.

Die Messgeometrie bzgl. Beleuchtungs-/Beobachtungsstrahlung sollte den diffusen Reflexionsanteil berücksichtigen. Möglich sind z.B. die Geometrien 8°/diffus, 0°/diffus, 0°/45°, X°/Y°(mit 0°<X<80° und 0°<Y<80°) und die jeweiligen inversen Geometrien (=umgekehrte Strahlrichtung). Dabei ist die Nomenklatur so, daß eine Einstrahlung senkrecht zur Probenebene als 0° bezeichnet wird und sich die Winkelangaben auf die Abweichung aus dieser Senkrechten beziehen. Die Messung der diffusen Reflexion erfolgt entsprechend über dem gesamten Bereich der Probenebene, also von +90° bis -90°. Die Messung kann mit oder ohne, bevorzugt mit Glanzeinschluss erfolgen.

Grundsätzlich sind auch die Applikationen auf transparentem Untergrund in verschiedenen Schichtdicken und daran Transmissionsmessungen, z.B. mit der Messgeometrie 0°/diffus, möglich.

Sämtliche gemessenen oder berechneten Spektren der vorliegenden Erfindung können rechnerisch nach an sich bekannten Methoden geglättet werden, eine solche Glättung ist jedoch nicht erfindungsgemäß erforderlich.

Schritt c): Ermittlung der konzentrationsspezifischen Absorptions- K($\lambda$) und Streuspektren S($\lambda$) der einzelnen Pigmente aus dem in b) gemessenen Reflexionsspektrum im gewünschten Wellenlängenbereich $\lambda$.

Dem Fachmann sind mathematische Theorien bekannt, die die Ausbreitung elektomagnetischer Strahlung in einem pigmentierten Medium in Abhängigkeit der darin stattfindenden spektralen Absorption und Streuung beschreiben. Jede Theorie, die eine Lösung für die Bestimmung der Transmission einer mehrere Pigmente beinhaltenden Beschichtung aus Eigenschaften der einzelnen Pigmente bereitstellt, kann für das erfindungsgemäße Verfahren verwendet werden.

Als einfachste und etablierte Theorie wird hier bevorzugt die Kubelka-Munk-Theorie (KMT, Zwei-Kanal-Modell) angewandt. Absicht der Entwickler dieser Theorie war die Beschreibung des optischen Verhaltens pigmentierter Materie im sichtbaren Spektralbereich. Der Formalismus dieser Theorie wird erfindungsgemäß über die Grenzen des Sichtbaren hinaus, auch für den UV- oder den IR-Spektralbereich angewendet.

Die Grundzüge dieser Theorie sind in Hans G. Völz, Industrial Color Testing, Weinheim: VCH Verlagsges., 2. Aufl. 2001, in den Kapiteln 3.3, 4.5, 7.2.1 und 7.2.2 dargestellt.

Es können aber auch andere Formulierungen der Strahlungstransportgleichung zur Beschreibung der Zusammenhänge beim Durchgang elektromagnetischer Strahlung durch ein partikuläres Medium, in dem die Strahlung partiell gestreut und/oder absorbiert wird, eingesetzt werden. Diese Modelle zur Berechnung von Reflexions-, Streuungs- und Transmissionseigenschaften pigmentierter Medien basieren überwiegend auf der Mie-Theorie und verwenden in der Regel die daraus abgeleiteten optischen Größen Absorptionskoeffizient, Streukoeffizient und die Phasenfunktion aus der Beschreibung einzelner Pigmentteilchen.

Insbesondere zur Beschreibung von Effektlacken, d.h. Beschichtungsmassen, die Effektpigmente enthalten, kann es erforderlich sein, auf das Vier-Kanal-Modell oder die sog. Vielkanaltheorie (Methode der diskreten Ordinaten) zurückzugreifen, die das Strahlungsfeld in eine größere Zahl von Strahlungsflüssen in verschieden Richtungen zerlegt und die Anisotropie einzelner Streuprozesse in Betracht zieht.

Die Grundzüge dieser Theorien sind in Hans G. Völz, Industrial Color Testing, Weinheim: VCH Verlagsges., 2. Aufl. 2001, in den Kapiteln 3.1.2, 3.2 und 7.2.3 dargestellt.

Die Kubelka-Munk-Theorie stellt einen phänomenologischen Ansatz zur Beschreibung des Strahlungstransports in Medien mit streuenden und/oder absorbierenden Eigenschaften dar, der stark vereinfachend den Lichtdurchgang in nur zwei Richtungen, nämlich senkrecht in das Medium hinein und entgegengesetzt gerichtet wieder hinaus, betrachtet. In weiteren entscheidenden Annahmen wird davon ausgegangen, daß die Streuung isotrop erfolgt und die Lichtverteilung innerhalb der Schicht aufgrund der stattfindenden Vielfachstreuprozesse einen rein diffusen Charakter besitzt. Im Rahmen dieser Theorie können analytische Ausdrücke für Transmission (T) und Reflexion (R) planparalleler trüber Medien für den Fall diffuser Beleuchtung und hemisphärischer Beobachtung der transmittierten bzw. reflektierten Strahlung angegeben werden. Beide Größen sind Funktionen des Absorptions- (K) und des Streukoeffizienten (S), der betrachteten Schichtdicke (SD) und der Reflexionseigenschaften der die Schicht begrenzenden Oberflächen nach gegebenenfalls notwendiger Saunderson-Korrektur (s.u.).

Nach den entsprechenden Gleichungen der KMT (P. Kubelka, F. Munk, Zeitschrift für technische Physik, 11 a (1931), S. 593) wird für jedes der unter b) vermessenen Pigmente aus den unter b) und d) gewonnenen Reflexionsspektren und vorgegebene oder gewünschte Schichtdicke SD je ein Absorptions(K)-Spektrum und Streu(S)-Spektrum über den ganzen gewünschten Wellenlängenbereich (Hans G. Völz, Industrial Color Testing, Weinheim: VCH Verlagsges., 2. Aufl. 2001, Seite 102) berechnet.

Dazu werden die Reflexionsspektren der das jeweilige Pigment enthaltenden Beschichtung über den verschiedenen Untergründen sowie die Reflexionsspektren der Untergründe bevorzugt der mathematischen Saunderson-Korrektur zur Eliminierung von Effekten der inneren Reflexion an Oberflächen unterworfen; Gleichungen hierzu siehe Hans G. Völz, Industrial Color Testing, Weinheim: VCH Verlagsges., 2. Aufl. 2001, Seite 75-78.

Für die Saunderson-Korrektur werden die Parameter $r_0$ (externer Reflexionskoeffizient) für die Reflektivität der Beschichtungsoberfläche bzgl. gerichteter, von außen auftreffender Strahlung und $r_2$ (interner Reflexionskoeffizient) bzgl. diffuser, von innen auftreffender Strahlung benötigt. Bei Anwendung der Saunderson-Korrektur auf die KMT sind übliche Werte $r_0 = 0,04$ und $r_2 = 0,6$. Die Werte für $r_0$ und $r_2$ sind abhängig von der Brechzahl n des Mediums und können in Abhängigkeit dieser Brechzahl angepaßt werden. Die angegebenen Werte für $r_0$ und $r_2$ sind typische Werte für Medien mit einer Brechzahl von ca. $n \approx 1,5$.

Die Saunderson-Korrektur kann beispielsweise entfallen, wenn die Brechzahlen 1 oder nahe 1 sind, beispielsweise 1,3 oder darunter.

Die Brechzahl und damit die Reflektivität transparenter Medien nimmt im allg. mit abnehmender Wellenlänge zu und wird im UV-Spektralbereich größer als im visuellen ("Cauchy"-Verhalten), so dass andere Werte für $r_0$ zu einem besseren Rechenergebnis führen können, beispielsweise von 0,03 bis zu 0,07, bevorzugt von 0,04 bis 0,06 und besonders bevorzugt von 0,04 bis 0,05.

Bzgl. $r_2$ ist zu beachten, dass ein am metallischen Untergrund gerichtet reflektierter Anteil der Messstrahlung zu einer verringerten inneren Reflexion führen kann, so dass Werte für $r_2 < 0,6$ zu einem besseren Rechenergebnis bei der Beschreibung der Wechselwirkung der Pigmente mit der härtenden Strahlung führen können, beispielsweise von 0 bis 0,6, bevorzugt von 0,1 bis 0,5, besonders bevorzugt von 0,2 bis 0,4.

Sofern bekannt können auch wellenlängenabhängige Werte für $r_0$ und $r_2$ verwendet werden.

Der gewünschte Wellenlängenbereich $\lambda$ umfaßt den Wellenlängenbereich, in dem die Strahlungshärtung stattfindet, d.h. den Wellenlängenbereich der Bestrahlungseinheit, mit der die Strahlungshärtung durchgeführt werden soll und gegebenenfalls zusätzlich den Wellenlängenbereich des sichtbaren Lichts. Bevorzugt sollte dieser Wellenlängenbereich das Absorptionsspektrum und besonders bevorzugt das Aktivierbarkeitsspektrum des verwendeten mindestens einen Photoinitiators I umfassen. Beispielsweise ist der gewünschte Wellenlängenbereich 200 bis 2500 nm, bevorzugt 200 bis 2000, besonders bevorzugt 200 bis 1500, ganz besonders bevorzugt 200 bis 1000 und insbesondere 200 bis 780 nm.

■ Schritt d): Messung der Reflexion des Substrats im gewünschten Spektralbereich.

■ In gleicher Weise wie unter b) beschrieben werden die Reflexionsspektren der beiden Untergründe, d.h. für die mindestens zwei Bereiche mit unterschiedlichen Reflexionswerten, an nicht beschichteten Stellen bzw. gleichartigen Untergrundstücken gemessen. Auf diese Weise kann eine Datensammlung für typische Substrate angelegt werden.

■ Schritt e): Ermittlung der Werte für Gesamtabsorption $K_t(\lambda)$ und Gesamtstreuung $S_t(\lambda)$ der Beschichtungsmasse auf dem Substrat aus den Werten aus c) und d) für die gewünschte Pigmentzusammensetzung.

Die zur Anwendung vorgesehene bzw. auf Eignung zur Aushärtung zu überprüfende Beschichtungsmasse enthält eine Pigmentierung, die sich aus einem oder mehreren Pigmenten mit gegebenen Mengenanteilen zusammensetzen kann, deren Pigmentierungszusammensetzung vorgegeben oder gegebenenfalls in Schritt a) bestimmt worden ist.

Die optischen Eigenschaften einer Beschichtung, die verschiedene Pigmente enthält, setzen sich entsprechend einem Formalismus, den die verwendete Theorie liefern muss, aus den optischen Eigenschaften der Einzelpigmente und ihrem jeweiligen Gewichtsanteil an der Gesamtpigmentierung zusammen.

Gemäß der KMT sind die $K(\lambda)$- und die $S(\lambda)$-Werte einer aus mehreren Pigmenten zusammengesetzten Pigmentierung bei jeder Wellenlänge additiv. Zur Beschreibung der optischen Eigenschaften der Gesamtpigmentierung wird durch anteilmäßig gewichtete Addition der $K(\lambda)$- und $S(\lambda)$-Werte der Einzelpigmente ein Gesamtabsorptions- $K_t(\lambda)$-und ein Gesamtstreu- $S_t(\lambda)$-Spektrum berechnet (D.B. Judd, G. Wyszecki, Color in Business, Science, and Industry, 2nd ed., John Wiley and Sons, New York, 1963, S. 413).

Der mindestens eine Photoinitiator I in der Beschichtungsmasse absorbiert ebenso wie Pigmente die Strahlung der Lampe, er kann deshalb wie ein Pigment behandelt werden, d.h. es kann ein $K(\lambda)$-Spektrum für ihn generiert und in die Berechnung von $K_t(\lambda)$ einbezogen werden.

Schritt f)

Ermittlung der integralen Transmission $T_i$ für die Pigmentzusammensetzung im gewünschten Wellenlängenbereich.

Die Durchhärtung einer Beschichtungsmasse bis zum Untergrund während der Strahlungshärtung ist entscheidend für die anwendungstechnische Eignung der Beschichtung. Insbesondere die Haftung zum Untergrund hängt davon ab, dass ausreichende molekulare Vernetzungsreaktionen an der Grenzschicht zwischen Beschichtung und Untergrund stattgefunden haben. Dies setzt voraus, dass während des Härtungsvorgangs (d.h. im Verlauf der Bestrahlung) ausreichend Strahlungsenergie, die zur Anregung des Fotoinitiators geeignet ist, in dieser Grenzschicht deponiert wird, d.h. diese erreicht.

Ein Maß für die dort deponierte Strahlungsenergie ist die Intensität der anregenden Strahlung an dieser Stelle. Ein Maß für die Intensität der anregenden Strahlung an der unteren Grenzfläche der Beschichtung ist die Transmission der Beschichtung, d.h. das Verhältnis der Intensität einer Strahlung einer gegebenen spektralen Verteilung nach Durchlaufen der Beschichtung mit gegebener Schichtdicke SD zur Intensität vor Eindringen in die Beschichtung.

Gemäß der KMT wird die Transmission $T(\lambda)$ einer Schicht mit Schichtdicke SD und optischen Eigenschaften, charakterisiert durch ihr $K_t(\lambda)$- und $S_t(\lambda)$-Spektrum, für jede Wellenlänge im für die Härtung relevanten Spektralbereich (bevorzugt 250-450nm) berechnet (Völz, Industrial Color Testing, Weinheim: VCH Verlagsges., 2. Aufl. 2001, S.97).

Abhängig vom jeweiligen Härtungsverfahren können unterschiedliche Strahlungsquellen mit verschiedener spektraler Verteilung $B(\lambda)$ der Strahlungsleistung, d.h. unterschiedlichen Emissionsspektren, zum Einsatz kommen. Die an der unteren Grenzfläche der Beschichtung ankommende Strahlungsintensität hängt jeweils proportional von $T(\lambda)$ und von $B(\lambda)$ ab.

Deshalb wird als Maß für die Durchlässigkeit der Beschichtungsmasse für die härtende Strahlung die mit der Intensitätsverteilung einer gegebenen Strahlungsquelle gewichtete mittlere Transmission $T_i$, im folgenden integrale Transmission genannt,

$$T_i = \Sigma(t_\lambda \bullet b_\lambda) / \Sigma(b_\lambda),$$

aus den spektralen Einzelwerten $t_\lambda$ für die Transmission und $b_\lambda$ für die einfallende Strahlungsintensität berechnet, wobei die Einzelwerte jeweils gleiche Wellenlängenabstände besitzen sollen, z.B. 1 - 20nm, bevorzugt 2-15, besonders bevorzugt 3-10 und ganz besonders bevorzugt 5-10 nm. Die Summierung (bzw. analog eine Integration) umfasst sinnvollerweise den für die Härtung relevanten Spektralbereich, bevorzugt 250 bis 450 nm, und besonders bevorzugt den Wellenlängenbereich, in dem der Photoinitiator aktivierbar ist und innerhalb dessen $b_\lambda \neq 0$ gilt.

Die integrale Transmission $T_i$ ist ein Maß für die in der Grenzschicht zum Untergrund deponierte Strahlungsenergie und somit dazu geeignet, verschiedene Pigmentierungen hinsichtlich ihrer zu erwartenden Durchhärtung miteinander zu vergleichen.

Der Grad der durch die eingebrachte UV-Strahlungsenergie verursachten Härtung hängt aber auch von der spektralen Aktivierbarkeit $a(\lambda)$ des mindestens einen verwendeten Fotoinitiators I ab, die nicht notwendigerweise mit dessen Absorptionsspektrum übereinstimmen muß (siehe unten). Dies wirkt sich umso mehr aus, je unterschiedlicher die spektralen Transmissions-Verteilungen von verschiedenen zu vergleichenden Pigmentierungen sind, da der Photoinitiator naturgemäß nur in einem solchen Wellenlängenbereich vorteilhaft aktivierbar ist, in dem die ihn umgebende Pigmentierung besonders durchlässig ist, d.h. eine signifikante Transmission aufweist. Andererseits ist der Einfluss der spektralen Aktivierbarkeit des Photoinitiators bei sog. Weißaufhellungen zumeist vernachlässigbar, d.h. bei Lacken mit Buntpigmenten und einem i.Vgl. dazu hohen Gehalt an farblos streuenden Pigmenten, z.B. Titandioxid- oder Kalziumkarbonat-Pigmenten, da die bevorzugten farblos streuenden Pigmente, wie z.B. Titandioxid, eine ausgeprägte Absorption bei kurzen Wellenlängen besitzen und damit die Anregung des Fotoinitiators auf den Spektralbereich mit größeren Wellenlängen (für Titandioxid ca. >370nm) eingrenzen. Dies hat zur Folge, daß es bei Verwendung eines weißaufhellenden Pigments in der Regel keinen Vorteil bringt, einerseits einen Photoinitiator zu verwenden, der in einem Spektralbereich unterhalb von ca. 370 nm aktivierbar ist und andererseits die Aktivierbarkeit des Photoinitiators für Wellenlängen unter 370 nm zu betrachten.

Erfindungsgemäß kann zusätzlich als Maßzahl für den zu erwartenden Reaktionsumsatz die Aktivierung A definiert werden. Der betrachtete Reaktionsumsatz basiert auf der Radikalbildung eines Photoinitiators mit anschließender Reaktion. Für jede Wellenlänge λ ist der spektrale Beitrag zur Aktivierung der Vernetzungsreaktion gegeben durch das Produkt aus der Intensität der Strahlung an der Grenzfläche zum Substrat (Strahlungsintensität, siehe Definition der integralen Transmission) und der Aktivierbarkeit des Fotoinitiators, gegeben durch die entsprechenden spektralen Einzelwerte $a_\lambda$ (siehe unten). Die gesamte Aktivierung A der Vernetzungsreaktion im Grenzschichtbereich ergibt sich durch Summierung der spektralen Einzelbeiträge.

$$A = \Sigma(t_\lambda \bullet b_\lambda \bullet a_\lambda) / (\Sigma(b_\lambda) \bullet \Sigma(a_\lambda))$$

Einzelbeiträge für Wellenlängen, bei denen die anregende Strahlungsenergie oder die Aktivierbarkeit des Fotoinitiators Null ist, tragen nicht zur Summe bei. Die Summierung (bzw. analog eine Integration) umfasst sinnvollerweise den für die Härtung relevanten Spektralbereich, bevorzugt 250 bis 450 nm, und besonders bevorzugt den Wellenlängenbereich, in dem der Photoinitiator aktivierbar ist und innerhalb dessen $b_\lambda \neq 0$ gilt.

Die Aktivierbarkeit ist eine spektral abhängige Größe, gegeben durch die spektralen Einzelwerten $a_\lambda$, wobei die Einzelwerte $a_\lambda$ jeweils gleiche Wellenlängenabstände besitzen sollen, z.B. 1 - 20nm, bevorzugt 2-15, besonders bevorzugt 3-10 und ganz besonders bevorzugt 5-10 nm. Jeder spektrale Einzelwert $a_\lambda$ beschreibt den Reaktionsumsatz pro Strahlungsintensität bei Wellenlänge λ und gegebenem Wellenlängenabstand. Relevant für die Strahlungsintensität ist deren Wert an der Grenze zwischen Beschichtung und Substrat.

Die Aktivierung A kann ein besseres Maß für die Durchhärtung sein als die integrale Transmission $T_i$. Allerdings ist die spektrale Aktivierbarkeit eines Photoinitiators nicht notwendigerweise identisch mit seinem Absorptionsspektrum und deshalb schwierig und aufwändig zu bestimmen. In erster Näherung kann davon ausgegangen werden, daß Aktivierbarkeits- und Absorptionsspektrum des Photoinitiators übereinstimmen. Es stellt jedoch eine bevorzugte Ausführungsform der vorliegenden Erfindung dar, die Aktivierbarkeit des Photoinitiators zu bestimmen.

Eine Möglichkeit zur Bestimmung der spektralen Aktivierbarkeit eines Fotoinitiators / einer Fotoinitiatormischung besteht darin, einen mit dem zu charakterisierenden Fotoinitiator versehenen strahlungshärtbaren Lackfilm mit monochromatischem Licht, z.B. aus Lasern oder einem Monochromator, zu belichten und anschließend den Grad der erreichten Härtung anhand eines geeigneten Indikators, z.B. Härte, E-Modul, Haftung, Quellungsresistenz, zu bestimmen oder direkt den erreichten Reaktionsumsatz anhand der chemisch umgesetzten Doppelbindungen, z.B. per Raman-Spektroskopie, in Abhängigkeit von der eingestrahlten Wellenlänge λ zu ermitteln.

Eine weitere Möglichkeit besteht darin, zunächst ein Aktivierbarkeitsspektrum des Fotoinitiators z.B. in Anlehnung an sein leicht zugängliches Absorptionsspektrum empirisch festzulegen und anhand einer Korrelation der Härtungsergebnisse von UV-Lacken mit unterschiedlichen Pigmentierungen, deren Transmission in dem betrachteten Wellenlängenbereich beispielsweise mit einer der oben angeführten Methoden ermittelt werden können, unter Berücksichtigung der eingestrahlten Wellenlängen mit den dafür berechneten Aktivierungswertenabzugleichen bzw. durch empirische Methoden oder einen geeigneten Algorithmus zu optimieren.

Schritt g): Ermittlung der Variablen, die für die gewünschte Strahlungshärtung erforderlich sind, auf Basis der in f) ermittelten integralen Transmission $T_i$. Die Ermittlung der Variablen auf Basis der in f) ermittelten Aktivierung A könnte analog erfolgen.

Ob die gewünschte Durchhärtung einer gegebenen Pigmentzusammensetzung in einer pigmentierten Beschichtung in einem gegebenen Strahlungshärtungsprozess eintritt oder nicht, hängt ab

1.) von der Durchlässigkeit der Beschichtung für die den Fotoinitiator anregenden Strahlung, charakterisiert durch $T_i$ (siehe oben) und

2.) von der in die Beschichtung eingestrahlten Strahlungsenergie E, bestimmt durch die Strahlungsleistung und Art der Strahlungsquelle, beispielsweise aus einer oder mehreren Lampen, Abstand des Substrats von der Strahlungsquelle, Bandgeschwindigkeit, Streckenlänge, Anzahl der Durchläufe oder andere Maße für die Verweilzeit, Atmosphäre, unter der die Härtung durchgeführt wird, sowie gegebenenfalls Art und Menge des eingesetzten mindestens einen Photoinitiators I.

3.) von den Eigenschaften des Photoinitiators. Deshalb wird in einer bevorzugten Ausführungsform der Erfindung zusätzlich zu 1.) und 2.) die Aktivierbarkeit des verwendeten Photoinitiators berücksichtigt.

Da E für verschiedene Prozesse unterschiedlich ist, wird für jeden Prozess eine kritische integrale Transmission $T_{i,krit}$ bestimmt, die die Beschichtung mindestens aufweisen muss, damit die gewünschte Durchhärtung durch die gesamte pigmentierte Schicht bis zum Substrat erreicht wird.

Dazu wird einmalig je Härtungsprozess, d.h. für die zu verwendende Strahlungsquelle, mit der vorgesehenen Bandgeschwindigkeit und der vorgesehenen Anzahl an Belichtungen sowie für den gewünschten Photoinitiator eine

**EP 1 754 042 B1**

Testreihe aus mehreren, vorzugsweise 3 - 7 Beschichtungen hergestellt, die sich in mindestens einer Variablen unterscheiden, die in die Berechnung von $T_i$ eingeht, z.B. der Konzentration einer oder mehrerer Pigmente und/oder der Schichtdicke. Alle Beschichtungen dieser Testreihe werden mit dem gegebenen Prozess unter Gleichhaltung der Prozesseigenschaften behandelt und anschließend auf ihre Durchhärtung geprüft. Die $T_i$ derjenigen Beschichtung, die mit geringstem $T_i$ gerade die Anforderungen an Durchhärtung erfüllt, wird als $T_{1,krit}$ festgelegt.

Wenn für den durch die obigen Variablen definierten Härtungsprozess $T_{i,\ krit}$ ermittelt worden ist, kann die Durchhärtung für jede künftig eingesetzte Pigmentierung berechnet werden, in der Regel sind keine weiteren Experimente mehr nötig, solange Strahlungsquelle und -leistung, Bandgeschwindigkeit, Anzahl der Durchläufe sowie Art und Menge an Photoinitiator beibehalten werden.

Da sich die Leistungscharakteristik einer Lampe während der Lebensdauer verändern kann, kann es notwendig sein, diese in Intervallen zu überprüfen und bei Unterschreitung gewisser Grenzwerte einen Lampenwechsel vorzunehmen.

Die Durchhärtung kann bevorzugt durch solche Tests geprüft werden, die die Haftung der Beschichtung durch eine Belastung der Beschichtung parallel zum Untergrund untersuchen, wie beispielsweise der unten beschriebene Reibtest.

Als grobe Orientierung könnte Kratzfestigkeit mittels standardisierter Tests getestet werden, beispielsweise durch den Scotch-Britt Test, wie er beschrieben ist in WO 02/00754, S. 17, Z. 1 - 4, Bürstentests, wie sie beispielsweise beschrieben sind in P. Betz, A. Bartelt, Progress in Organic Coatings, 22, 1993, S. 27 - 37, Tesaabriß oder Haftung mit Gitterschnitt gemäß DIN 53151.

Die Berechnung von $T_i$ basiert in einer bevorzugten Ausführungsform der Erfindung auf den optischen Eigenschaften der einzelnen Pigmente, beschrieben durch ihre $K(\lambda)$-und $S(\lambda)$-Spektren gemäß der KMT. Da diese Spektren in der Regel den Spektralbereich für die härtende Strahlung und den gesamten visuellen Spektralbereich umfassen, kann bei Variation der Pigmentierungsvariablen die Veränderung der zu erwartenden Farbe und abgeleiteter koloristischer Eigenschaften simultan berechnet werden. Dies geschieht durch Berechnung des Reflexionsspektrums der Beschichtung aus $K(\lambda)$ und $S(\lambda)$ unter Anwendung einer Saunderson-Korrektur (Hans G. Völz, Industrial Color Testing, Weinheim: VCH Verlagsges., 2. Aufl. 2001, Seite 97 und 75-78); aus dem Reflexionsspektrum kann z.B. nach DIN 5033 der Farbort, nach DIN 6174 der Farbabstand zu einem anderen gegebenen Farbort, oder nach DIN 53235 die Farbtiefe der Beschichtung bestimmt werden.

Kann unter Einhaltung der gewünschten Beschichtungs-Eigenschaften, z.B. Farbe, Koloristik oder Pigmentspezies und -konzentration, die Bedingung $T_i \geq T_{i,krit}$ nicht erreicht werden, dann kann wie folgt verfahren werden:

- Neue Pigmente werden zur Berechnung von $T_i$ herangezogen, so daß beim obigen Schritt a) wieder eingesetzt wird und/oder
- die Schichtdicke SD und/oder die Pigmentierungszusammensetzung kann rechnerisch so eingestellt werden, dass die gewünschten Eigenschaften erfüllt werden. Nun wird die Schichtdicke unter Beibehaltung der Pigmentspezies und ihrer Mengenanteile soweit auf einen Wert $SD_r$ reduziert, bis $T_I \geq T_{i,krit}$ gilt. In diesem Fall ist eine durchgehärtete Beschichtung dann zu erwarten, wenn so viele Schichten der reduzierten Schichtdicke $SD_r$ übereinander aufeinanderfolgend aufgetragen und ausgehärtet werden, bis die Gesamtschichtdicke SD erreicht ist.

Ein weiterer Gegenstand der Erfindung ist ein Verfahren zur Strahlungshärtung von strahlungshärtbaren, pigmentierten Beschichtungsmassen, enthaltend mindestens ein Pigment P, mindestens ein Bindemittel B und mindestens einen Photoinitiator I, auf einem Substrat, umfassend die obigen Schritte a) bis g) und zusätzlich

h) Durchführung der Strahlungshärtung der Beschichtung auf Basis der in g) ermittelten Variablen.

Die Beschichtung wird dann mit den unter g) ermittelten Variablen mit dem gegebenen Prozess ausgehärtet.

Die Strahlungshärtung kann allgemein beispielsweise im Wellenlängenbereich von 200 bis 2500 nm erfolgen, bevorzugt im UV-, sichtbaren und/oder NIR-Bereich, besonders bevorzugt im UV und/oder sichtbaren Bereich und ganz besonders bevorzugt im UV-Bereich.

Als Strahlungsquellen für die Strahlungshärtung geeignet sind z.B. Quecksilber-Niederdruckstrahler, -Mitteldruckstrahler oder Hochdruckstrahler, die gegebenenfalls undotiert, Gallium- oder Eisen-dotiert sein können, sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung elektromagnetischer Strahlung, also NIR und/oder UV-Strahlung und/oder sichtbares Licht, vorzugsweise Licht im Wellenlängenbereich von $\lambda=200$ bis 780 nm strahlt, besonders bevorzugt von $\lambda=200$ bis 500 nm und ganz besonders bevorzugt $\lambda=250$ bis 430 nm. Als Strahlungsquellen dienen beispielsweise gegebenenfalls dotierte Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm$^2$.

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Bestrahlung kann gegebenenfalls auch unter einer Atmosphäre verringerten Sauerstoffpartialdrucks oder unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Selbstverständlich kann auch mit einer höheren eingestrahlten Strahlungsenergie als der in g) durch den dort betrachteten Härtungsprozess gegebenen eingestrahlten Strahlungsenergie E strahlungsgehärtet werden, beispielsweise mit bis zu 200 % von E, bevorzugt mit bis zu 150 %, besonders bevorzugt mit bis zu 130 % und ganz besonders bevorzugt mit bis zu 120 % von E. Dafür können die Variablen der Belichtung entspechend variiert, beispielsweise die Verweilzeit in der Anlage, z.B. durch Verlangsamung der Bandgeschwindigkeit oder die Anzahl der Durchläufe durch die Anlage erhöht werden. Dies zieht aber eine evtl. unnötige Blockierung der Bestrahlungsanlage nach sich.

Ein weiterer Gegenstand der vorliegenden Erfindung ist eine Geschäftsmethode, in der die oben angeführten Schritte bis einschließlich Schritt g) getrennt von dem Schritt h) durchgeführt werden. Dies kann beispielsweise bedeuten, daß ein Anwender, der eine Strahlungshärtung (Schritt h)) durchführen will, von einem Anbieter mit Informationen über die Art und Weise der optimalen Durchführung bzw. der Mindesterfordernisse der Strahlungshärtung, ermittelt durch die Schritte bis einschließlich g), versorgt wird. Dies kann beispielsweise $T_i$, $SD_r$ oder alternative Pigmentzubereitungen zur Erzielung des gewünschten Farbeindrucks umfassen.

Dies kann beispielsweise dadurch erfolgen, daß ein Programm mit angeschlossener Datenbank, in der die Grunddaten ($K(\lambda)$, $S(\lambda)$) gängiger handelsüblicher Pigmente erfaßt sind, an den Anwender weitergegeben wird, oder das Programm beispielsweise per Internet oder über World Wide Web, dem Anwender öffentlich oder in einem Password-geschützten Bereich zugänglich gemacht wird, oder die Versorgung mit den zur Strahlungshärtung erforderlichen Informationen telefonisch, schriftlich oder mündlich durch den Anbieter an den Anwender auf Anfrage, beispielsweise für eine gewünschte Pigmentierungszusammensetzung oder zum Erzielen eines bestimmten Farbeindrucks, erfolgt.

Dies kann weiterhin umfassen, daß dem Anwender ein Programm zur Verfügung gestellt wird, für das der Anbieter, gegebenenfalls auf Anfrage, aktualisierte Grunddaten für Pigmente ($K(\lambda)$ und $S(\lambda)$ aus Schritt b) und c)) und/oder Reflexionswerte für Substrate (aus Schritt d)) nachliefert. Eine solche Aktualisierung oder Zugriff auf eine Datenbank mit den Grunddaten kann wiederum per Update, Internet oder Word Wide Web erfolgen.

Ein weiterer Gegenstand der vorliegenden Erfindung ist eine Vorrichtung zur Durchführung einer Strahlungshärtung, umfassend mindestens eine Beleuchtungseinheit und mindestens eine Recheneinheit sowie gegebenenfalls mindestens eine Meßeinheit, wobei mit Hilfe der Recheneinheit die Informationen zur Durchführung der Strahlungshärtung gemäß der oben dargelegten Schritte bis einschließlich g) ermittelt werden und mit diesen so ermittelten Informationen die Strahlungshärtung mit Hilfe der Beleuchtungseinheit durchgeführt wird.

Der Informationsfluß zwischen Rechen- und Beleuchtungseinheit kann dabei direkt, d.h. durch Ansteuerung der Beleuchtungseinheit durch die Recheneinheit, oder indirekt, d.h. durch manuelle Bedienung der Beleuchtungseinheit auf Grundlage der von der Recheneinheit ermittelten Werte, erfolgen.

In einer bevorzugten Ausführungsform wirkt die Recheneinheit auf die Beleuchtungseinheit und regelt an dieser die Verweilzeit der zu härtenden Objekte in der Beleuchtungseinheit, beispielsweise über eine Anpassung der Bandgeschwindigkeit, für verschiedene Pigmentzusammensetzungen, mit denen die Objekte beschichtet sind. Dazu werden die Gesamt-K- und Gesamt-S-Werte ($K_t(\lambda)$ und $S_t(\lambda)$ aus Schritt e)) für verschiedene Pigmentzusammensetzungen für die Recheneinheit hinterlegt und die Verweilzeit der Objekte in der Beleuchtungsanlage je nach Pigmentzusammensetzung von der Recheneinheit angepaßt.

In der Meßeinheit, beispielsweise einem UVNIS-Spektrometer, werden die jeweiligen Schritte b) und d) ausgeführt. Die Meßeinheit ist bevorzugt getrennt von der Beleuchtungseinheit und wirkt auch nicht direkt auf diese ein.

Ein weiterer Gegenstand der vorliegenden Erfindung ist die Verwendung einer solchen Vorrichtung in der Strahlungshärtung.

Die folgenden Beispiele sollen die Eigenschaften der Erfindung erläutern, ohne sie aber einzuschränken.

Beispiele

Als "Teile" oder "%" seien in dieser Schrift, wenn nicht anders angegeben, "Gewichtsteile" oder "Gewicht%" verstanden.

Schritt b)

Das Gelbpigment Paliogen® L2140 der BASF AG wurde in einem Dispergierbindemittel bestehend aus 80 Teilen Laromer® LR 8863 der BASF AG und 20 Teilen Laromer® LR 9013 der BASF AG dispergiert (2h Skandex) und durch Auflacken mit Laromer® LR 9007 der BASF AG und Zugabe der Photoinitiatoren Lucirin® TPO der BASF AG (1 % auf pigmentierten Gesamtlack) und Darocure® 1173 der Ciba Spezialitätenchemie (2% auf pigmentierten Gesamtlack) zu UV-härtbaren Lacken mit Pigmentkonzentrationen von 1%, 5% und 10% verarbeitet.

Diese Lacke wurden mit Spiralrakel (nominelle Schichtdicke 50μm) jeweils auf einem mit klarem Haftungsprimer (Primer 3034/8: 70 Teile Acronal® S 716 der BASF AG, 30 Teile Laromer® LR 8949 der BASF AG, 1 Teile Irgacure® 184 der Ciba Spezialitätenchemie (50%ig in Butylglykol), 0,5% Acrysol® RM 8 W der Rohm & Haas (10% in Wasser) beschichteten schwarzem bzw. blankem Aluminium-Blech als verschiedenen Untergründen appliziert (Kontrastblech - Hersteller: Fa.Müller & Bauer GmbH&Co. 72555 Metzingen; Aluminium-Blech - Hersteller: Fa.Meier & Co., 58103 Hagen).

Die Aushärtung erfolgte in einer UV-Härtungsanlage der Fa. IST (Typ: U-300-M-2-TR) mit je einem CK ("Hg")-Quecksilbermitteldruck- und einem CK1 ("Ga")-Strahler bei 2-maligem Durchlauf mit 5m/min Bandgeschwindigkeit. Die Strahlungsleistungen der Strahler, integriert über UV-A, UV-B, UV-C und UV-V, betrugen für CK ca. 255 W/cm$^2$ und für CK1 ca. 275 W/cm$^2$. Die entsprechenden Dosis-Werte bei einem Durchlauf mit 5m/min Bandgeschwindigkeit sind für CK ca. 1600 J/cm$^2$ und für CK1 ca. 1700 J/cm$^2$.

Die mit einem Schichtdickenmessgerät QuaNix 1500 der Fa. Automation Dr.Nix GmbH Köln bestimmten Schichtdicken betrugen über beiden Untergründen 30μm.

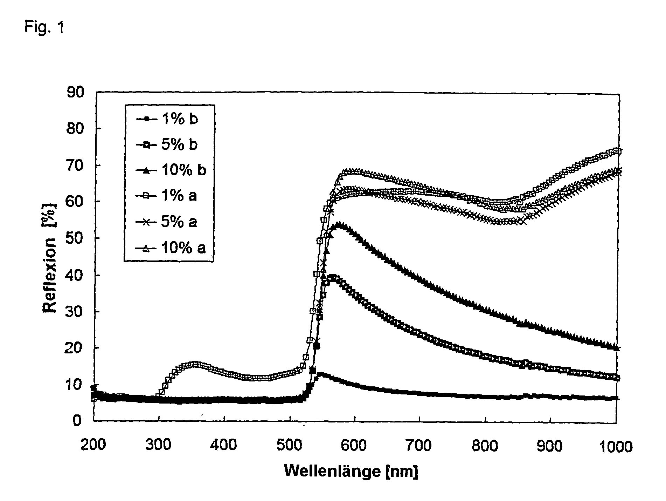

Die spektrale Reflexion der Beschichtungen über blankem Aluminium- (a) bzw. schwarzem (b) Untergrund wurden mit einem UV/VIS/NIR-Spektrometer CARY5 (Fa. Varian) unter Einsatz einer Integrationskugel mit der Messgeometrie 8°/diffus und unter Einschluss des Glanzes im Spektralbereich 200-1000 nm mit einem Messpunkte-Abstand von 5nm gemessen (Fig. 1).

Schritt d)

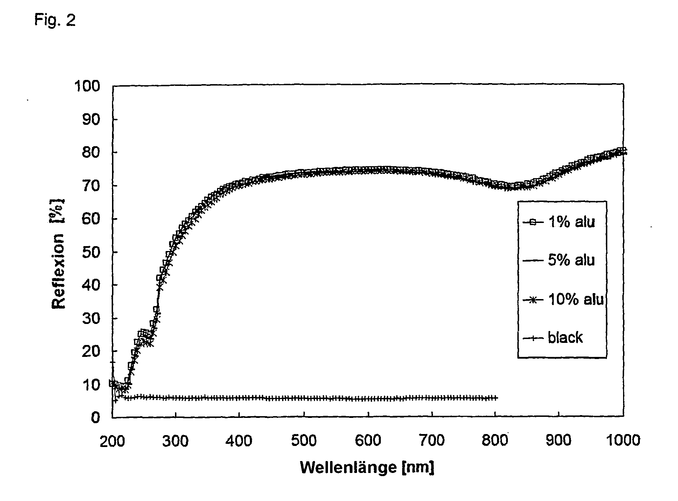

Die spektrale Reflexion des mit einem Haftprimer versehenen Aluminium-Untergrundes aus b) wurde an unbeschichteten Stellen aller drei Referenzpräparationen gemessen. Der schwarze Untergrund wurde nur an einem unbeschichteten Schwarzblech gemessen, nachdem gefunden worden war, dass die Abweichung der Reflexionswerte für verschiedene der verwendeten Schwarzbleche vernachlässigbar war. Die Messungen erfolgten wie in b) mit einem UV/VIS/NIR-Spektrometer CARY5 (Fa. Varian) unter Einsatz einer Integrationskugel mit der Messgeometrie 8°/diffus und unter Einschluss des Glanzes im Spektralbereich 200 - 1000nm bzw. 200 - 800 nm mit einem Messpunkte-Abstand von 5nm (Fig. 2).

Schritt c)

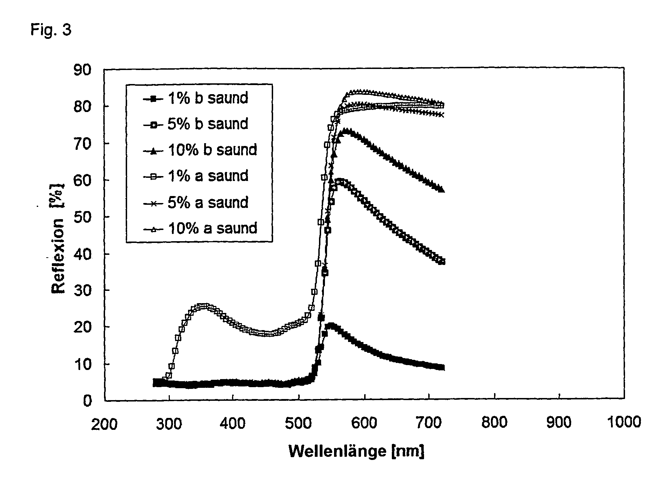

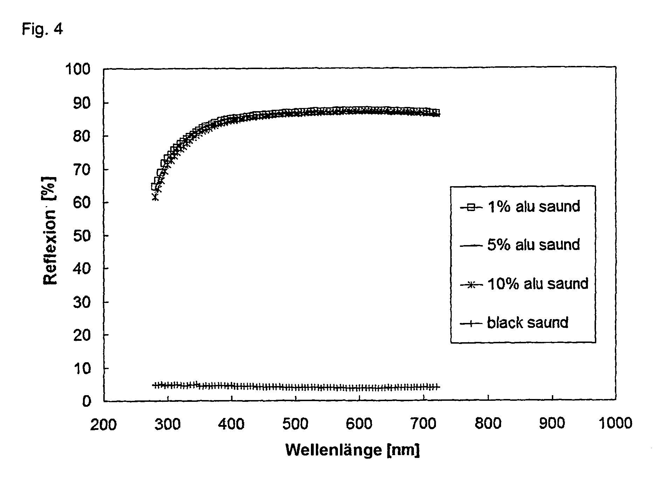

Für jede Pigmentkonzentration aus b) wurden die Reflexionsspektren, gemessen über den verschiedenen Untergründen, sowie die Reflexionsspektren der beiden Untergründe aus d) mathematisch Saunderson-korrigiert mit Werten für den externen und internen Reflexionskoeffizienten von $r_0 = 0,04$ und $r_2 = 0,6$ (Fig. 3 und 4).

Jeweils zwei Reflexionsspektren für je eine Pigmentkonzentration über blankem Aluminium bzw. schwarzem Untergrund beinhalten die Information über die Streuung und Absorption der enthaltenen Pigmente und werden zur Berechnung von $K(\lambda)$ und $S(\lambda)$ herangezogen.

Aus den Saunderson-korrigierten Reflexionsspektren der Beschichtungen und der zugehörigen mit Haftungsprimer versehenen Untergründe (Fig. 4) wurden für jede Pigment-Konzentration entsprechend dem Formalismus der KMT die $K(\lambda)$- und $S(\lambda)$-Spektren konzentrationsspezifisch berechnet (Fig. 5 und 6). Für jede Wellenlänge berechnen sich

$$S = [1/(b \bullet SD \bullet C)] \bullet \text{Arcoth} \left[ (1 - a \bullet (\rho_w{}^* + \rho_{0w}{}^*) + \rho_w{}^* \bullet \rho_{0w}{}^*) / (b \bullet (\rho_w{}^* - \rho_{0w}{}^*)) \right],$$

Einheit: $(\mu m \bullet \%)^{-1}$
und

$$K = S \bullet (a - 1),$$

Einheit: $(\mu m \bullet \%)^{-1}$
mit

$$b = \sqrt{(a^2 - 1)}$$

$$a = \left[\, (1 + \rho_w^* \bullet \rho_{0w}^*) \bullet (\rho_s^* - \rho_{0s}^*) + (1 + \rho_s^* \bullet \rho_{0s}^*) \bullet (\rho_{0w}^* - \rho_w^*) \,\right] / \left[\, 2 \bullet (\rho_s^* \bullet \rho_{0w}^* - \rho_w^* \bullet \rho_{0s}^*) \,\right]$$

Darin sind

$\rho_w^*$     Wellenlängenabhängiger Reflexionsgrad der Beschichtung über höher reflektierendem Untergrund
$\rho_s^*$     Wellenlängenabhängiger Reflexionsgrad der Beschichtung über geringer reflektierendem Untergrund
$\rho_{0w}^*$   Wellenlängenabhängiger Reflexionsgrad des höher reflektierenden Untergrunds
$\rho_{0s}^*$   Wellenlängenabhängiger Reflexionsgrad des geringer reflektierenden Untergrunds
SD     Dicke der Beschichtung in $\mu$m
C      Konzentration des Pigments in der Beschichtung in Gew%

Der Index * zeigt an, dass die damit markierten Reflexionsgrade Saunderson-korrigiert sind:

$$\rho^* = (\rho - r_0) / \left[1 - r_0 - r_2 \bullet (1 - \rho)\right]$$

Darin sind

$\rho^*$     einer der oben spezifizierten Reflexionsgrade
$\rho$      der entsprechende Reflexionsgrad vor der Saunderson-Korrektur
$r_0$      externer Reflexionskoeffizient
$r_2$      interner Reflexionskoeffizient

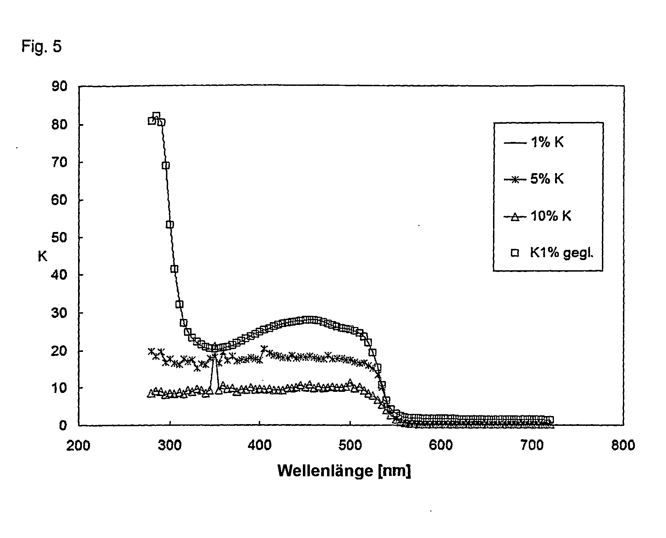

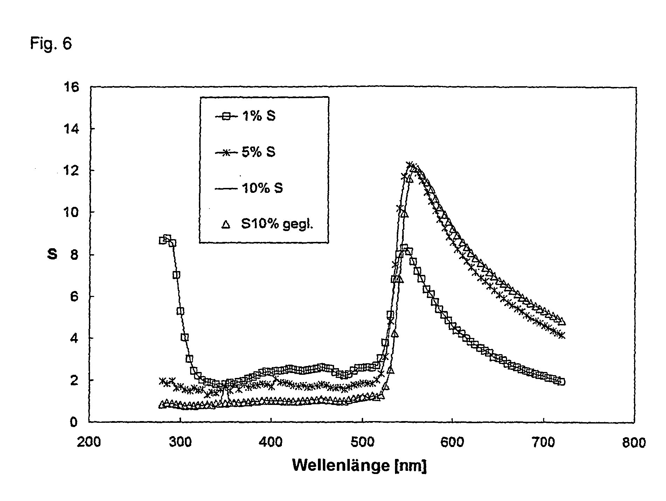

Man erkennt in Fig. 5 und 6, daß bei einer Wellenlänge unterhalb von ca. 520 nm die Absorption überwiegt, wohingegen im längerwelligen Bereich oberhalb von 520 nm die Streuung überwiegt, was auch für den gelben Farbeindruck des Pigments verantwortlich ist.
Obwohl alle gefundenen K($\lambda$)- und S($\lambda$)-Spektren für das gleiche Pigment Paliogen® L2140 der BASF AG gelten und auf die Pigmentkonzentration normiert wurden und deshalb nach der Theorie gleich sein sollten, findet man konzentrationsabhängige Unterschiede, die z.B. durch unterschiedliche Dispergierung des Pigments in den Beschichtungen und/oder durch unterschiedlich große experimentelle Effekte, wie z.B. Rauschen oder ungleichmäßige Schichtdicken, in den Reflexionsspektren verursacht werden. Es muss deshalb eine sinnvolle Auswahl für die gemäß dem Verfahren zu verwendenden Werte getroffen werden.
In der Regel werden zur weiteren Berechnung solche Spektren zugrundegelegt, die ein günstiges Signal-Rausch-Verhältnis aufweisen, bevorzugt solche Spektren zur Berechnung von K($\lambda$), die im Wellenlängenbereich, der für die Absorption relevant ist, ein günstiges Signal-Rausch-Verhältnis aufweisen und zur Berechnung von S($\lambda$), solche, die im Wellenlängenbereich, der für die Streuung relevant ist, ein günstiges Signal-Rausch-Verhältnis aufweisen.
Hier wurden als K($\lambda$)-Spektrum in der weiteren Berechnung die Werte für die 1 %-Pigmentierung zugrundegelegt, da im Absorptionsbereich des Pigments (ca. <520nm) nur diese Pigmentierungshöhe zu einem signifikanten experimentellen Unterschied der Reflexionsdaten über den beiden verschiedenen Untergründen führt. Die geringere Verlässlichkeit der rechnerischen Ergebnisse für K($\lambda$) aus der 5%- und 10%-Pigmentierung ist am Rauschen der K($\lambda$)-Werte im Absorptionsbereich zu erkennen (Fig. 5).
Aus analogen Betrachtungen wurde als S($\lambda$)-Spektrum die Werte der 10%-Pigmentierung gewählt.
Diese ausgewählten K($\lambda$)- und S($\lambda$)-Spektren wurden durch eine gleitende Mittelung über 5 Werte geglättet, eine solche Glättung ist jedoch nicht erfindungsgemäß erforderlich.

Schritt e):

Für den Farbton RAL1007 "Narzissengelb" wurde mittels einer handelsüblichen Rezeptier-Software eine Pigmentierung bei 10%iger Gesamtpigmentierungshöhe in einer 30$\mu$m dicken Lackschicht über weißem Untergrund ermittelt. Als Pigmente wurden folgende Verkaufsprodukte der BASF AG eingesetzt:

| Pigment | Einsatzmenge [%Gewicht] |
|---|---|
| Paliotol® L 0962 HD | 55,4 % |
| Paliotol® L 2140 HD | 12,4% |
| Sicotan® L 1912 | 32,2% |

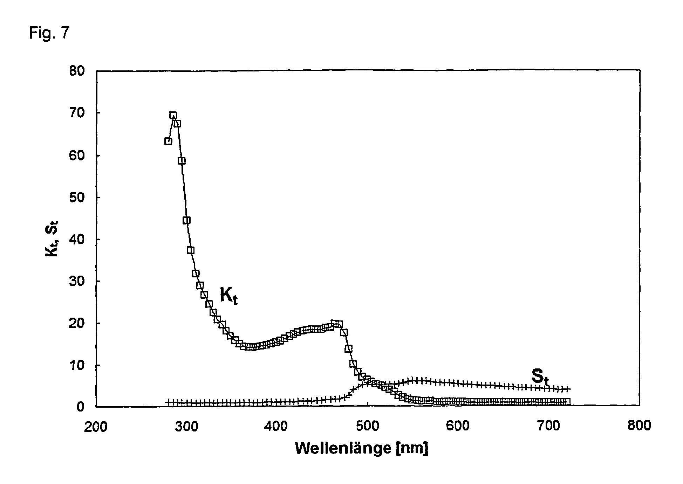

Für alle drei Pigmente wurden die $K(\lambda)$- und $S(\lambda)$-Spektren gemäß Schritt c) bestimmt. Durch anteilmäßig gewichtete Addition der $K(\lambda)$- und $S(\lambda)$-Werte der Einzelpigmente ergaben sich das $K_t(\lambda)$- und $S_t(\lambda)$-Spektrum (Fig. 7), d.h. in diesem Fall $K_t(\lambda) = 55,4\% \cdot K(\lambda)_{L0962HD} + 12,4\% \cdot K(\lambda)_{L2140HD} + 32,2\% \cdot K(\lambda)_{L1912}$ und entsprechend für $S_t(\lambda)$.

Schritt f):

Zur Nachstellung des Farbtons RAL1007 "Narzissengelb" wurde im Schritt e) eine mögliche Pigmentierung (Rezept 1) beschrieben. Eine weitere mögliche Pigmentierungszusammensetzung zur Nachstellung von RAL 1007 ist Rezept 2:

| Pigment | Rezept 1 | Rezept 2 |
|---|---|---|
| | Einsatzmenge [%Gewicht] | Einsatzmenge [%Gewicht] |
| Paliotol® L 0962 HD | 55,4 % | |
| Paliotol® L 2140 HD | 12,4% | 30,4% |
| Sicotan® L 1912 | 32,2% | |
| Paliotan® L 1145 | | 69,1 % |
| Paliotol® L 0080 | | 0,5 % |

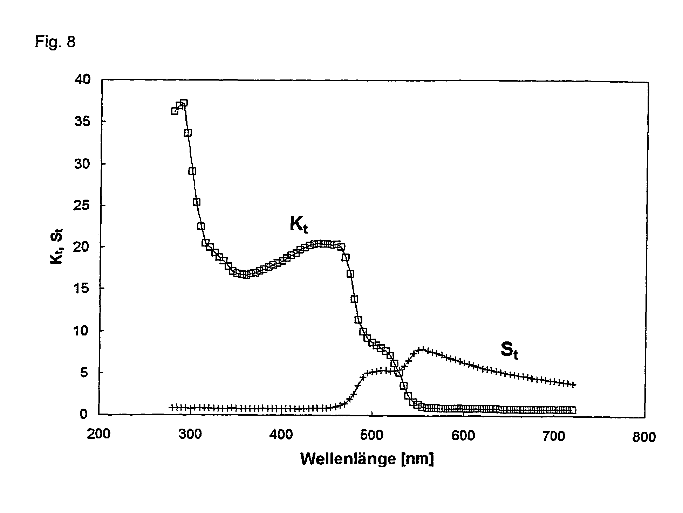

Durch anteilmäßig gewichtete Addition der $K(\lambda)$- und $S(\lambda)$-Werte der Einzelpigmente und analoger Vorgehensweise ergaben sich das $K_t(\lambda)$- und $S_t(\lambda)$-Spektrum für Rezept 2 (Fig. 8).

Es war zu klären, welches der beiden Rezepte für die Durchhärtung in einer UV-Härtungsanlage der Fa. IST (Typ: U-300-M-2-TR) mit je einem CK("Hg")- und einem CK1 ("Ga")-Strahler mit nahezu gleicher Strahlungsleistung (s.o.) hinsichtlich Durchhärtung zu bevorzugen ist.

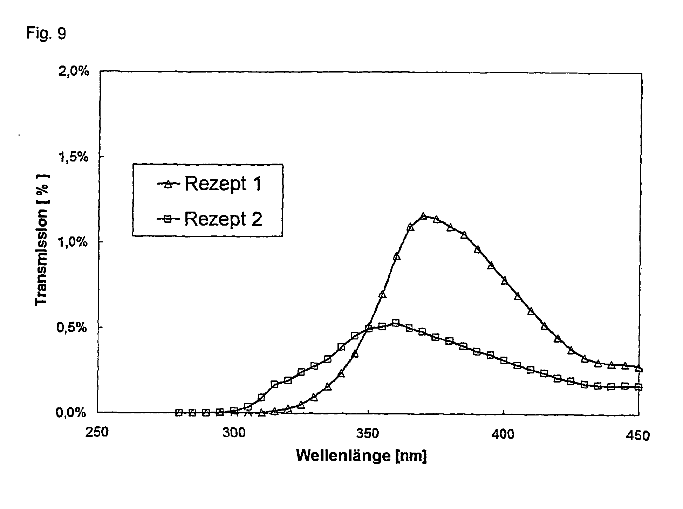

Für beide Rezepte wurde gemäß der KMT und nach Anwendung der Saunderson-Korrektur die spektrale Transmission berechnet (Fig. 9).

Fig. 9 beschreibt, dass für Rezept 1 bei $\lambda$=370 nm ca. 1,2 % der ursprünglich eingestrahlten Lichtenergie die gesamte pigmentierte Schicht durchdringt und an die Grenzschicht zwischen pigmentierter Schicht und Untergrund gelangt.

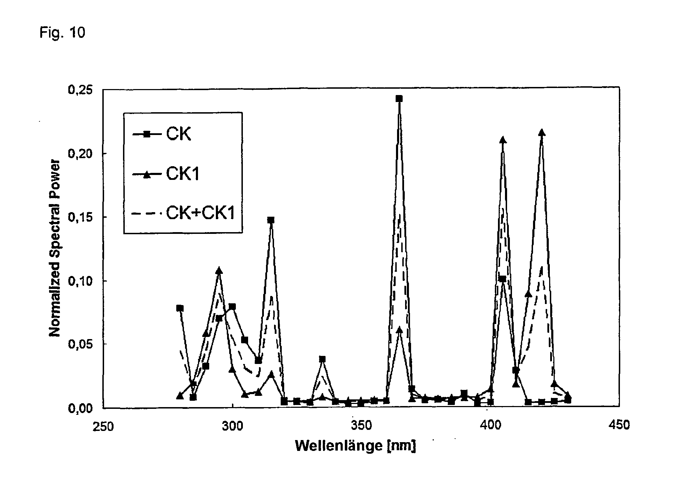

Für die spektrale Intensitätsverteilungen der beiden Lampen wurden Angaben eines Lampenherstellers (Fa. Hönle UV Technology) verwendet (Fig. 10). Entsprechend dem tatsächlichen Einsatz je eines CK- und CK1-Strahlers wurde die Summe der Verteilungen des CK- und des CK1-Strahlers als Strahlungsverteilung $B(\lambda)$ für den betrachteten Prozess verwendet.

Die integrale Transmission $T_i$ für die vorliegende spektrale Verteilung $B(\lambda)$ der Lampenstrahlung wurde für beide Rezepte aus den Transmissionswerten des jeweiligen Rezeptes und den spektralen Daten der Strahlungsleistungsverteilung berechnet gemäß

$$T_i = \Sigma(t_\lambda \bullet b_\lambda) / \Sigma(b_\lambda);$$

die Summation erfolgte von 280nm - 430nm. Außerhalb dieses Wellenlängen-Intervalls tragen Lampenleistung und Transmission wegen vernachlässigbarer Aktivierbarkeit des Photoinitiators nicht zur Durchhärtung bei.

Es ergaben sich die integralen Transmissionen $T_i$ der beiden Rezepte:

$T_i$(Rezept 1) = 0,44 %
$T_i$(Rezept 2) = 0,22 %

Dies bedeutet, daß im Fall des Rezeptes 1 0,44% und für Rezept 2 lediglich 0,22 % der ursprünglich eingestrahlten Lichtenergie die pigmentierte Schicht bis zur Grenzschicht durchdringen.

Eine Beschichtung mit Pigmentierung nach Rezept 1 verspricht mit dem verwendeten Härtungsprozess somit aufgrund ihrer höheren Transmission, also ihrer höheren Lichtdurchlässigkeit, eine bessere Durchhärtung als mit einer Pigmentierung nach Rezept 2.

Schritt g)

Für den Farbton RAL1007 "Narzissengelb" wurden mittels der bereits genannten handelsüblichen Rezeptier-Software sechs weitere Pigmentierungen bei 10%iger Gesamtpigmentierungshöhe in einer 30$\mu$m dicken Lackschicht über weißem Untergrund ermittelt. Dabei wurden die oben genannten sowie weitere handelsübliche Pigmente für die Rechnung verwendet.

Es wurden Beschichtungen mit allen insgesamt 8 verschiedenen Pigmentierungen hergestellt und nach dem oben genannten Prozess ausgehärtet. Die integralen Transmissionen lagen zwischen 0,04% und 0,44%.

Die Beschichtungen wurden einem Reib-Test unterzogen. In diesem Test wurde die gehärtete Beschichtung parallel zum Untergrund mit dem Fingernagel geschert und auf eventuelle Verletzungen, beispielsweise Abrieb, Abplatzungen, Risse, Wellen oder Druckstellen in der Oberfläche visuell untersucht, die eine nicht ausreichende Haftung am Untergrund zeigen. Darin zeigten Proben mit $T_i$-Werten bis 0,23% ungenügende Haftung zum Untergrund; ab $T_i$-Werten von 0,41% ist eine signifikante Haftungsverbesserung auf mittlerem Niveau zu beobachten, und ab einem $T_i$-Wert von 0,44% ist die Haftung sehr gut. Dieser $T_i$-Wert wird deshalb als $T_{i,\,krit}$ festgelegt. Folglich muss, um mit dem betrachteten Prozess eine Beschichtung mit guter Haftung zum Untergrund zu erhalten, jede Veränderung an der Pigmentierung (Pigmentspezies, -konzentration, Schichtdicke) so gewählt werden, dass ihr $T_i$-Wert mindestens 0,44% beträgt.

Schritt f)

Möglichkeit 1: Systematische Ermittlung des Aktivierbarkeitsspektrums $a_\lambda$ eines Photoinitiators in einem Lackfilm

Man könnte das Aktivierbarkeitsspektrum eines Photoinitiators dadurch bestimmen, daß man einen Photoinitiator, beispielsweise einen der oben aufgeführten, in einer unpigmentierten Bindemittelzusammensetzung, beispielsweise der in Schritt b) genannten, in einer bestimmten Schichtdicke für eine bestimmte Zeit, die jedoch kürzer als die erfahrungsgemäß zur Durchhärtung notwendige sein müßte, mit möglichst monochromatischem Licht, beispielsweise aus einem durchstimmbaren Laser oder Monochromator, in einem bekannten Wellenlängenbereich, z.B. einem Wellenlängenbereich, der 5 bis 50 nm, bevorzugt 5 bis 30, besonders bevorzugt 10 bis 25 nm umfaßt, belichtet.

Die belichtete und somit teil- oder durchgehärtete Beschichtungsmasse wird anschließend auf den Grad der Umsetzung der chemischen Vernetzungsreaktion geprüft. Dies geschieht durch beispielsweise Quantifizierung der noch nicht umgesetzten C=C-Doppelbindungen mittels Raman-Spektroskopie.

Anschließend wird der Versuch mit einem veränderten Wellenlängenbereich aber ansonsten gleichen Versuchsparametern durchgeführt, solange bis die Aktivierbarkeit des Photoinitiators über den Wellenlängenbereich im Absorptionsspektrum des Photoinitiators erfaßt ist.

Die Ergebnisse der Bestimmung des chemischen Umsatzes der Vernetzungsreaktion in Abhängigkeit vom betrachteten Wellenlängenbereich können als Aktivierbarkeit $a_\lambda$ des Photoinitiators zur Berechnung der Aktivierung A nach der Formel

$$A = \Sigma(t_\lambda \bullet b_\lambda \bullet a_\lambda) / (\Sigma(b_\lambda) \bullet \Sigma(a_\lambda))$$

verwendet werden.

Möglichkeit 2: Empirische Ermittlung des Aktivierbarkeitsspektrums eines Photoinitiators in einem Lackfilm

Es wurde gefunden, dass die integrale Transmission des Rezeptes 1 größer als diejenige von Rezept 2 ist, und erwartungsgemäß wurde für Rezept 1 eine bessere Haftung als für Rezept 2 gefunden.

Der folgende Absatz stellt eine hypothetische Betrachtung dar:

Wenn hypothetisch bei gleichen Werten der integralen Transmission und der spektralen Transmissionsverläufe (siehe Fig. 9) gefunden würde, dass das Rezept 2 die bessere Haftung zeigte, dann könnte davon ausgegangen werden, dass Rezept 2, trotz seiner geringeren integralen Transmission einen überwiegenden Vorteil durch seine höhere spektrale Transmission im Bereich 300 nm bis 350 nm besäße. Die in diesem Wellenlängenbereich in die Beschichtungsmasse eingestrahlte Leistung ist sowohl für die CK- als auch für die CK1-Lampe geringer als die Leistung im Wellenlängenbereich >350nm, sie wäre aber effizienter in chemische Vernetzung der Beschichtungsmasse umgesetzt, woraus geschlossen werden könnte, dass in einem solchen hypothetischen Fall die Aktivierbarkeit des Fotoinitiators im Wellenlängenbereich 300 nm bis 350 nm größer wäre als im längerwelligen Bereich.

Möglichkeit 3: Systematische Ermittlung des Aktivierbarkeitsspektrums $a_\lambda$ eines Photoinitiators außerhalb eines Lackfilms

Die Aktivierbarkeit eines Photoinitiators kann auch außerhalb eines Lackfilms, beispielsweise in einer Lösung, bestimmt werden. Dabei unterscheiden sich die hiermit ermittelten Werte von den oben angeführten Werten dadurch, daß sie die Aktivierbarkeit des Photoinitiators an sich, beispielsweise mittels einer Quantenausbeute angeben, nicht jedoch dessen Fähigkeit, mittels Radikale eine Polymerisation in einer Beschichtungsmasse auszulösen.

Dazu könnte man den gewünschten Photoinitiator in einem geeigneten Lösungsmittel lösen, und bestrahlt mit möglichst monochromatischem Licht, beispielsweise aus einem stimmbaren Laser, in einem bekannten Wellenlängenbereich, z.B. einem Wellenlängenbereich, der 5 bis 50 nm, bevorzugt 5 bis 30, besonders bevorzugt 10 bis 25 nm umfaßt.

Die bei dieser Belichtung erzeugten Radikale können beispielsweise nicht-invasiv, beispielsweise mittels einer ESR-Sonde, gemessen oder invasiv, beispielsweise mittels eines radikalisch abfangbaren Farbstoffes, wie beispielsweise Triphenylmethan, Diphenylpicrylhydrazin, Nitrosobenzol, 2-Methyl-2-nitroso-propan oder Benzaldehydtert-butylnitron, abgefangen werden. Die mit Radikalfängern angefangenen Produkte können dann beispielsweise titriert oder photometrisch bestimmt werden.

Somit kann auf diese Weise die Menge der aus dem Photoinitiator erzeugten Radikale in Abhängigkeit von der Wellenlänge ermittelt werden. Dieser Wert muß mit einem Effektivitätsfaktor, der in der Regel zwischen 0,3 und 1,0, bevorzugt zwischen 0,4 und 0,95, besonders bevorzugt zwischen 0,5 und 0,9 liegt, multipliziert werden, um die effektiv durch den Photoinitiator gestarteten Radikalreaktionen in der Beschichtungsmasse anzugeben.

Liste der Abbildungen

Fig. 1: Spektrale Reflexion der Beschichtungen verschiedener Pigmentierungskonzentration über Aluminium- (a) bzw. schwarzem (b) Untergrund im Spektralbereich 200 - 1000 nm

Fig. 2: Spektrale Reflexion der Untergründe im Spektralbereich 200 - 1000nm bzw. 200 - 800 nm

Fig. 3: Saunderson korrigierte Reflexionsspektren der Pigmentkonzentrationen aus b)

Fig. 4: Saunderson korrigierte Reflexionsspektren der Untergründe

Fig. 5: Mittels KMT berechnete konzentrationsspezifsche Absorptions- (K-) Spektren der Pigmentkonzentrationen aus b) $[(\mu m \cdot \%)^{-1}]$

Fig. 6: Mittels KMT berechnete konzentrationsspezifische Streu- (S-) Spektren der Pigmentkonzentrationen aus b) $[(\mu m \cdot \%)^{-1}]$

Fig. 7: Gesamtabsorptions- ($K_t$-) und Gesamtstreu- ($S_t$-) Spektren für Pigmentzusammensetzung "Narzissengelb" gemäß Rezept 1 $[(\mu m \cdot \%)^{-1}]$

Fig. 8: Gesamtabsorptions- ($K_t$-) und Gesamtstreu- ($S_t$-) Spektren für Pigmentzusammensetzung "Narzissengelb" gemäß Rezept 2 $[(\mu m \cdot \%)^{-1}]$

Fig. 9: Spektrale Transmission für die Rezepte 1 und 2

Fig. 10: Typische Emissionsspektren der in der verwendeten Belichtungsanlage eingesetzten Lampentypen, jeweils normiert auf Gesamtintensität 1 im Wellenlängenbereich 280 - 430nm

**Patentansprüche**

1. Verfahren zur Ermittlung der Bedingungen zur Strahlungshärtung von strahlungshärtbaren, pigmentierten Beschichtungsmassen, enthaltend mindestens ein Pigment P, mindestens ein Bindemittel B und mindestens einen Photoinitiator I, auf einem Substrat, umfassend die Schritte

a) Vorgeben einer Pigmentzusammensetzung oder gegebenenfalls Ermittlung der zum Erzielen des gewünschten Farbeindrucks erforderlichen Pigmentzusammensetzung,
b) Messung der Reflexionsspektren der in der Pigmentzusammensetzung enthaltenen Pigmente P in Abhängigkeit von deren Konzentration, Zusammensetzung und/oder Schichtdicke,
c) Ermittlung der konzentrationsspezifischen Absorptions- $K(\lambda)$ und Streuspektren $S(\lambda)$ der einzelnen Pigmente aus dem in b) gemessenen Reflexionsspektrum im gewünschten Wellenlängenbereich $\lambda$,
d) Messung der Reflexion des Substrats im gewünschten Spektralbereich,
e) Ermittlung der Werte für Gesamtabsorption $K_t(\lambda)$ und Gesamtstreuung $S_t(\lambda)$ der Beschichtungsmasse auf dem Substrat aus den Werten aus c) und d) für die gewünschte Pigmentzusammensetzung,
f) Ermittlung der integralen Transmission $T_i$ für die Pigmentzusammensetzung im gewünschten Wellenlängenbereich und
g) Ermittlung der Variablen, die für die Strahlungshärtung erforderlich sind, auf Basis der in f) ermittelten integralen Transmission $T_i$.

2. Verfahren zur Strahlungshärtung von strahlungshärtbaren, pigmentierten Beschichtungsmassen, enthaltend mindestens ein Pigment P, mindestens ein Bindemittel B und mindestens einen Photoinitiator I, auf einem Substrat, umfassend die Schritte a) bis g) gemäß Anspruch 1 und zusätzlich

h) Durchführung der Strahlungshärtung der Beschichtung auf Basis der in g) ermittelten Variablen.

3. Verfahren nach Anspruch 2, **dadurch gekennzeichnet, daß** man die Strahlungshärtung gemäß Schritt h) mit bis zu 200 % der in g) errechneten Strahlungsdosis ausführt.

4. Verfahren nach einem der Ansprüche 1 bis 3, **dadurch gekennzeichnet, daß** die Ermittlung der konzentrationsspezifischen Absorptions- $K(\lambda)$ und Streuspektren $S(\lambda)$ nach der Kubelka-Munk-Theorie erfolgt.

5. Verfahren nach einem der Ansprüche 1 bis 3, **dadurch gekennzeichnet, daß** die Ermittlung der konzentrationsspezifischen Absorptions- $K(\lambda)$ und Streuspektren $S(\lambda)$ nach der Vier-Kanal- oder Vielkanaltheorie erfolgt.

6. Verfahren nach einem der vorstehenden Ansprüche, **dadurch gekennzeichnet, daß** die in Schritt b) und/oder d) gemessenen Spektren Saunderson-korrigiert werden.

7. Verfahren nach einem der vorstehenden Ansprüche, **dadurch gekennzeichnet, daß** man zusätzlich eine integrale Transmission $T_i$ und eine kritische integrale Transmission $T_{i,krit}$ bestimmt, die die Beschichtung mindestens aufweisen muss, damit die gewünschte Durchhärtung durch die gesamte pigmentierte Schicht bis zum Substrat erreicht wird, und im Fall daß $T_i < T_{i,krit}$ entweder eine neue Pigmentzusammensetzung in Schritt a) wählt und die Folgeschritte erneut durchläuft, bis die Bedingung $T_i \geq T_{i,krit}$ erfüllt ist, oder eine reduzierte Schichtdicke $SD_r$ wählt, für die $T_i \geq T_{i,krit}$ erfüllt ist, gemäß Schritt h) strahlungshärtet und anschließend solange Beschichtungsmasse mit der reduzierten Schichtdicke aufträgt und strahlungshärtet bis die Schichtdicke SD mindestens erreicht ist.

8. Verfahren nach einem der vorstehenden Ansprüche, **dadurch gekennzeichnet, daß** man die Aktivierbarkeit des verwendeten Photoinitiators berücksichtigt.

9. Vorrichtung zur Durchführung einer Strahlungshärtung gemäß einem der Ansprüche 1 bis 7, umfassend mindestens eine Beleuchtungseinheit und mindestens eine Recheneinheit sowie gegebenenfalls mindestens eine Meßeinheit, wobei mit Hilfe der Recheneinheit die Informationen zur Durchführung der Strahlungshärtung gemäß der Schritte bis einschließlich g) aus einem der Ansprüche 1 bis 7 ermittelt werden und mit diesen so ermittelten Informationen die Strahlungshärtung mit Hilfe der Beleuchtungseinheit durchgeführt wird.

10. Verwendung einer Vorrichtung gemäß Anspruch 9 in der Strahlungshärtung.

**EP 1 754 042 B1**

**Claims**

1. A method of determining the conditions for radiation curing radiation-curable pigmented coating materials comprising at least one pigment P, at least one binder B and at least one photoinitiator I on a substrate, comprising the steps of

   a) specifying a pigment composition or if appropriate determining the pigment composition required to obtain the desired color impression,
   b) measuring the reflection spectra of the pigments P present in the pigment composition, as a function of their concentration, composition and/or coat thickness,
   c) determining the concentration-specific absorption spectra $K(\lambda)$ and scattering spectra $S(\lambda)$ of the individual pigments from the reflection spectrum measured in b), in the desired wavelength range $\lambda$,
   d) measuring the reflection of the substrate in the desired spectral range,
   e) determining the values for total absorption $K_t(\lambda)$ and total scattering $S_t(\lambda)$ of the coating material on the substrate from the values from c) and d) for the desired pigment composition,
   f) determining the integral transmission $T_i$ for the pigment composition in the desired wavelength range, and
   g) determining the variables necessary for radiation curing on the basis of the integral transmission $T_i$ determined in f).

2. A method of radiation curing radiation-curable pigmented coating materials comprising at least one pigment P, at least one binder B and at least one photoinitiator I on a substrate, comprising steps a) to g) as set forth in claim 1 and additionally

   h) implementing radiation curing of the coating on the basis of the variables determined in g).

3. The method according to claim 2, wherein radiation curing is formed in step h) with up to 200% of the radiation dose calculated in g).

4. The method according to any one of claims 1 to 3, wherein the concentration-specific absorption spectra $K(\lambda)$ and scattering spectra $S(\lambda)$ are determined in accordance with the Kubelka-Munk theory.

5. The method according to any one of claims 1 to 3, wherein the concentration-specific absorption spectra $K(\lambda)$ and scattering spectra $S(\lambda)$ are determined in accordance with the four-channel or multichannel theory.

6. The method according to any one of the preceding claims, wherein the spectra measured in step b) and/or d) are Saunderson-corrected.

7. The method according to any one of the preceding claims, further comprising determining an integral transmission $T_i$ and a critical integral transmission $T_{i,crit}$ which the coating must at least have in order to achieve the desired volume curing through the entire pigmented coat down to the substrate, and, in the event that $T_i < T_{i,crit}$, either choosing a new pigment composition in step a) and running through the sequential steps again until the condition $T_i \geq T_{i,crit}$ is met, or choosing a reduced coat thickness $SD_r$ for which $T_i \geq T_{i,crit}$ is met, radiation curing in accordance with step h), and then applying coating material with the reduced coat thickness and radiation curing until the coat thickness SD is at least reached.

8. The method according to any one of the preceding claims, wherein the activability of the photoinitiator used is taken into account.

9. Apparatus for implementing radiation curing as set forth in any one of claims 1 to 7, comprising at least one illumination unit and at least one arithmetic unit and also if appropriate at least one measuring unit, the arithmetic unit being used to determine the information for implementing radiation curing in the steps up to and including g) from any one of claims 1 to 7 and the illumination unit being used to implement radiation curing with said information thus determined.

10. The use of apparatus according to claim 9 in radiation curing.

**Revendications**

1. Procédé de détermination des conditions pour le durcissement par rayonnement de matériaux de revêtement pigmentés, pouvant être durcis par un rayonnement, contenant au moins un pigment P, au moins un liant B et au moins un photoinitiateur I, sur un substrat, comportant les étapes consistant à :

   a) mettre en place une composition pigmentaire ou éventuellement déterminer la composition pigmentaire nécessaire pour l'obtention de l'impression colorée souhaitée,
   b) mesurer les spectres de réflexion des pigments P contenus dans la composition pigmentaire en corrélation avec la concentration, la composition et/ou l'épaisseur de couche de ceux-ci,
   c) déterminer les spectres d'absorption $K(\lambda)$ et de diffusion $S(\lambda)$ des pigments individuels, spécifiques de la concentration, à partir du spectre de réflexion mesuré en b) dans la plage souhaitée de longueurs d'onde $\lambda$,
   d) mesurer la réflexion du substrat dans la plage spectrale souhaitée,
   e) déterminer les valeurs d'absorption totale $K_t(\lambda)$ et de diffusion totale $S_t(\lambda)$ du matériau de revêtement sur le substrat à partir des valeurs issues de c) et d) pour la composition pigmentaire souhaitée,
   f) déterminer la transmission intégrale $T_i$ pour la composition pigmentaire dans la plage souhaitée de longueurs d'onde, et
   g) déterminer les variables qui sont nécessaires pour le durcissement par rayonnement, sur la base de la transmission intégrale $T_i$ déterminée en f).

2. Procédé de durcissement par rayonnement de matériaux de revêtement pigmentés, pouvant être durcis par rayonnement, contenant au moins un pigment P, au moins un liant B et au moins un photoinitiateur I, sur un substrat, comportant les étapes a) à g) selon la revendication 1 et de manière supplémentaire :

   h) mettre en oeuvre le durcissement par rayonnement du revêtement sur la base des variables déterminées en g).

3. Procédé selon la revendication 2, **caractérisé en ce que** le durcissement par rayonnement selon l'étape h) est réalisé avec jusqu'à 200 % de la dose de rayonnement calculée en g).

4. Procédé selon l'une quelconque des revendications 1 à 3, **caractérisé en ce que** la détermination des spectres d'absorption K ($\lambda$) et de diffusion S ($\lambda$) spécifiques de la concentration a lieu selon la théorie de Kubelka-Munk.

5. Procédé selon l'une quelconque des revendications 1 à 3, **caractérisé en ce que** la détermination des spectres d'absorption $K(\lambda)$ et de diffusion S ($\lambda$) spécifiques de la concentration a lieu selon la théorie quatre canaux ou multicanaux.

6. Procédé selon l'une quelconque des revendications précédentes, **caractérisé en ce que** les spectres mesurés dans l'étape b) et/ou d) sont corrigés selon Saunderson.

7. Procédé selon l'une quelconque des revendications précédentes, **caractérisé en ce qu'**une transmission intégrale $T_i$ et une transmission intégrale critique $T_{i,krit}$, que le revêtement doit au moins présenter afin que le durcissement à coeur souhaité soit atteint à travers toute la couche pigmentée jusqu'au substrat, sont déterminées et, dans le cas où $T_i < T_{i,krit}$, une nouvelle composition pigmentaire est choisie dans l'étape a) et les étapes séquentielles se déroulent à nouveau jusqu'à ce que la condition $T_i \geq T_{i,krit}$ soit satisfaite ou bien une épaisseur réduite de couche $SD_r$, pour laquelle $T_i \geq T_{i,krit}$ est satisfaite, est choisie, le durcissement par rayonnement est effectué conformément à l'étape h) et le matériau de revêtement avec l'épaisseur réduite de couche est ensuite appliqué et durci par rayonnement jusqu'à ce que l'épaisseur de couche SD soit au moins atteinte.

8. Procédé selon l'une quelconque des revendications précédentes, **caractérisé en ce que** la capacité du photoinitiateur utilisé à être activé est prise en considération.

9. Dispositif de mise en oeuvre d'un durcissement par rayonnement selon l'une quelconque des revendications 1 à 7, comportant au moins une unité d'illumination et au moins une unité de calcul ainsi qu'éventuellement au moins une unité de mesure, les informations pour la mise en oeuvre du durcissement par rayonnement conformément aux étapes allant jusqu'à g) inclus étant déterminées selon l'une quelconque des revendications 1 à 7 et le durcissement par rayonnement étant mis en oeuvre à l'aide de l'unité d'illumination avec ces informations ainsi déterminées.

10. Utilisation d'un dispositif selon la revendication 9 pour le durcissement par rayonnement.

Fig. 1

Fig. 2

Fig. 3

Fig. 4

Legend:
- 1% alu saund
- 5% alu saund
- 10% alu saund
- black saund

X-axis: Wellenlänge [nm]
Y-axis: Reflexion [%]

Fig. 5

Fig. 6

Fig. 7

Fig. 8

Fig. 9

Fig. 10

## IN DER BESCHREIBUNG AUFGEFÜHRTE DOKUMENTE

### In der Beschreibung aufgeführte Patentdokumente

- EP 7508 A
- EP 57474 A
- DE 19618720 A
- EP 495751 A
- EP 615980 A
- DE 19826712 A
- DE 19913353 A
- WO 9833761 A
- EP 931247 B1
- US 6064487 A
- WO 0200754 A
- DE 19957900 A1

### In der Beschreibung aufgeführte Nicht-Patentliteratur

- *XIV FATIPEC-Kongreß,* 04. Juni 1978, 241-247
- CD Römpp Chemie Lexikon. Georg Thieme Verlag, 1995
- Advances in Polymer Science. 1974, vol. 14
- Chemistry and Technology of UV- and EB-Formulation for Coatings, Inks and Paints. **K. K. DIETLIKER.** Photoinitiators for Free Radical and Cationic Polymerization. SITA Technology Ltd, vol. 3
- **HANS G. VÖLZ.** *Industrial Color Testing,* 2001, 75-78
- **D.B. JUDD ; G. WYSZECKI.** Color in Business, Science, and Industry. John Wiley and Sons, 1963, 413
- **VÖLZ.** Industrial Color Testing. VCH Verlagsges, 2001, 97
- **P. BETZ ; A. BARTELT.** *Progress in Organic Coatings,* 1993, vol. 22, 27-37